(19) **Europäisches Patentamt / European Patent Office / Office européen des brevets**

(11) **EP 4 622 297 A1**

(12) # EUROPEAN PATENT APPLICATION
published in accordance with Art. 153(4) EPC

(43) Date of publication:
24.09.2025 Bulletin 2025/39

(21) Application number: 23905628.6

(22) Date of filing: 27.11.2023

(51) International Patent Classification (IPC):
*H04R 5/02* (2006.01)    *H04S 7/00* (2006.01)
*G01S 5/18* (2006.01)

(52) Cooperative Patent Classification (CPC):
G01S 5/18; H04N 21/436; H04N 21/6405;
H04R 5/02; H04S 7/00

(86) International application number:
PCT/CN2023/134491

(87) International publication number:
WO 2024/131460 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.12.2022 CN 202211644507

(71) Applicant: Huawei Technologies Co., Ltd.
Shenzhen, Guangdong 518129 (CN)

(72) Inventors:
• CHENG, Li
Shenzhen, Guangdong 518129 (CN)
• CAI, Shuanglin
Shenzhen, Guangdong 518129 (CN)
• LIANG, Zhitao
Shenzhen, Guangdong 518129 (CN)
• XIE, Dianhan
Shenzhen, Guangdong 518129 (CN)

(74) Representative: Gill Jennings & Every LLP
The Broadgate Tower
20 Primrose Street
London EC2A 2ES (GB)

(54) **METHOD, DEVICE AND SYSTEM FOR ESTABLISHING HOME THEATER**

(57)     This application provides a method for establishing a home theater, a device, and a system, and relates to the field of terminal technologies, to simplify an operation of a user in a process of establishing a home theater, thereby improving user experience. The method includes: receiving m pieces of first capability information from m second devices; obtaining placement positions of the m second devices; and determining, based on the placement positions of the m second devices and the m pieces of first capability information, whether the placement positions of the m second devices meet a preset condition; and if the preset condition is not met, displaying a first interface; or if the preset condition is met, displaying a second interface. Each of the m pieces of first capability information indicates a sound channel supported by a corresponding second device, and m is an integer not less than 1. The preset condition includes placement positions of second devices that support different sound channels during establishment of a home theater, the first interface includes recommendation information of the placement positions of the m second devices, and the second interface includes information indicating that placement succeeds.

```
Large screen device                              Speaker

S401: Monitor a broadcast message

              S402: First broadcast message

S403: Start, based on the first broadcast
message, to detect whether a speaker
discovered by the large screen device and
the large screen device are in a same room

              S404: Ultrasonic signal

              S405: Second broadcast message

S406: Send a third broadcast message based on the
ultrasonic signal and the second broadcast message

S407: Determine information about a same-
chamber speaker based on at least one third
broadcast message

S408: Determine, based on capability
information of the speaker and the
information about the same-chamber
speaker, whether the large screen device and
the speaker that is in the same room as the
large screen device can establish a home
theater

              S409: Complete establishment of the home theater
```

FIG. 4

## Description

This application claims priority to Chinese Patent Application No. 202211644507.1, filed with the China National Intellectual Property Administration on December 20, 2022 and entitled "METHOD FOR ESTABLISHING HOME THEATER, DEVICE, AND SYSTEM", which is incorporated herein by reference in its entirety.

## TECHNICAL FIELD

This application relates to the field of terminal technologies, and in particular, to a method for establishing a home theater, a device, and a system.

## BACKGROUND

With rapid development of smart home (for example, smart screens and speakers), more and more users establish home theater systems (referred to as home theaters below) including a plurality of devices at home and the like. In this way, the users can enjoy good audio-visual experience at home. However, an existing process of establishing a home theater is very complex, and the user needs to perform complex manual configuration, or a professional needs to provide door-to-door installation guidance. This is time-consuming and cumbersome, brings inconvenience to the user, and affects user experience.

## SUMMARY

This application provides a method for establishing a home theater, a device, and a system, to simplify an operation of a user in a process of establishing a home theater, thereby improving user experience.

To achieve the foregoing objective, this application uses the following technical solutions.

According to a first aspect, a method for establishing a home theater is provided, and is applied to a first device. The method may be performed by the first device, or may be performed by a component of the first device, for example, a processor, a chip, or a chip system of the first device, or may be implemented by a logical module or software that can implement all or some functions of the first device. The method includes: receiving m pieces of first capability information from m second devices; obtaining placement positions of the m second devices; and determining, based on the placement positions of the m second devices and the m pieces of first capability information, whether the placement positions of the m second devices meet a preset condition; and if it is determined that the placement positions of the m second devices do not meet the preset condition, displaying a first interface; and if it is determined that the placement positions of the m second devices meet the preset condition, displaying a second interface. Each of the m pieces of first capability information indicates a sound channel supported by a corresponding second device, and m is an integer not less than 1. The preset condition includes placement positions of second devices that support different sound channels during establishment of a home theater, the first interface includes recommendation information of a placement position of at least one of the m second devices, and the second interface includes information indicating that placement succeeds.

Based on the method provided in the first aspect, the first device determines, based on the sound channels and the placement positions that are respectively supported by the m second devices, whether the placement positions of the m second devices meet the preset condition; and if the placement positions meet the preset condition, the first device displays the second interface, where the second interface includes information indicating that placement succeeds; or if the placement positions do not meet the preset condition, the first device displays the first interface, and recommends the placement position of the at least one of the m second devices to a user. Compared with a manner in which the user determines the placement position and measures the placement position through an instruction manual or a manner in which a professional provides door-to-door guidance, this manner can help the user simply and quickly place the second device in the home theater without a complex manual operation of the user, so that a user operation can be simplified, thereby improving user experience.

In a possible implementation, the method provided in the first aspect may further include: obtaining placement positions of the m second devices again; and determining, based on the re-obtained placement positions of the m second devices and the m pieces of first capability information, whether the re-obtained placement positions of the m second devices meet the preset condition; and if it is determined that the re-obtained placement positions of the m second devices do not meet the preset condition, displaying a third interface, where the third interface includes recommendation information of a placement position of at least one of the m second devices; or if it is determined that the re-obtained placement positions of the m second devices meet the preset condition, displaying a fourth interface, where the fourth interface includes information indicating that placement succeeds.

In this way, after the user adjusts the placement position, the first device may continue to determine whether the adjusted placement position meets the preset condition, until positions of all the second devices are successfully placed.

In a possible implementation, the method provided in the first aspect may further include: after it is determined that the placement positions of the m second devices meet the preset condition, determining sound channel types of the m second devices based on the placement positions of the m second devices; and sending sound channel configuration information to the m second devices. The sound channel configuration information indicates the sound channel type.

In this implementation, after the user successfully places the second device, the first device may automatically allocate a sound channel to the m second devices. Compared with a manner in which the user configures the sound channel for the second device through a button, an application, or door-to-door guidance of a professional, this manner can help the user simply and quickly complete sound channel configuration without a manual operation of the user, so that user experience can be further improved.

In a possible implementation, the method provided in the first aspect may further include: after it is determined that the re-obtained placement positions of the m second devices meet the preset condition, determining sound channel types of the m second devices based on the re-obtained placement positions of the m second devices; and sending sound channel configuration information to the m second devices. The sound channel configuration information indicates the sound channel type. In this implementation, after the user successfully places the second device, the first device may automatically allocate a sound channel to the m second devices. Compared with a manner in which the user configures the sound channel for the second device through a button, an application, or door-to-door guidance of a professional, this manner can help the user simply and quickly complete sound channel configuration without a manual operation of the user, so that user experience can be further improved.

In a possible implementation, before the displaying the first interface based on the first capability information of m second devices and the preset condition, the method provided in the first aspect may further include: broadcasting an ultrasonic signal, where the ultrasonic signal includes an ultrasonic identifier; and broadcasting a first message, where the first message includes the ultrasonic identifier; and obtaining, based on a first condition, n second devices that are in a same room as the first device, where n is an integer not less than 1, n is not less than m. The first condition includes: receiving a second message. In this way, the first device may exclude a second device that is not in a same room as the first device, obtain a second device that is in the same room as the first device, and recommend a placement position of the second device that is in a same room as the first device, so that accuracy of establishing a home theater can be improved.

Optionally, a same room may be a same space, a same chamber, a same waiting hall, or the like. The room may be a living room, a bedroom, a study, a waiting hall, or the like.

**In** a possible implementation, the obtaining, based on a first condition, n second devices that are in a same room as the first device may include: if the first condition is met, determining that a second device that sends the second message and the first device are in a same room. For example, if the second message is received, it is determined that the second device that sends the second message and the first device are in a same room.

**In** a possible implementation, the second message includes one or more of the following: an ultrasonic identifier, a signal strength of the ultrasonic signal, and a signal strength of the first message.

The first condition further includes one or more of the following: the ultrasonic identifier included in the second message is consistent with the ultrasonic identifier sent by the first device, the signal strength of the ultrasonic signal is greater than or equal to a first threshold, and the signal strength of the first message is greater than or equal to a second threshold.

Alternatively, the first condition further includes one or more of the following: the ultrasonic identifier included in the second message is consistent with the ultrasonic identifier sent by the first device, a distance corresponding to the signal strength of the ultrasonic signal is less than or equal to a third threshold, and a distance corresponding to the signal strength of the first message is less than or equal to a fourth threshold.

In other words, the first device may further determine, based on the ultrasonic identifier included in the second message, the distance between the first device and the second device, and/or the strength of the signal (the ultrasonic signal and/or the first message) between the first device and the second device, whether the first device and the second device are in the same room.

**In** a possible implementation, after the obtaining, based on a first condition, n second devices that are in a same room as the first device, the method provided in the first aspect may further include: obtaining the m second devices from the n second devices based on first capability information of the n second devices and a second condition. The first capability information of the m second devices meets the second condition, and the second condition is a condition for establishing a home theater. **In** other words, the second device that meets the condition for establishing a home theater, for example, the m second devices, may be selected from the n second devices in a same room as the first device, where m is an integer less than or equal to n.

Optionally, the first device may receive the first capability information from the n second devices, where the n second devices include the m second devices. **In** other words, in addition to receiving the first capability information of the m second devices, the first device may further receive first capability information of the (m-n) second devices.

In a possible implementation, the method provided in the first aspect may further include: determining whether a newly added second device in a room in which the first device is located can join an established home theater system, where the established home theater system is established by the first device and the m second devices; and if it is determined that the newly added second device in the room in which the first device is located can join the established home theater system, displaying a fifth interface based on the m pieces of first capability information, second capability information of the newly added second device, and the preset condition, where the fifth interface includes information indicating a placement position of the newly added second device; or if it is determined that the newly added second device in the room in which the first device is located cannot join the established home theater system, displaying a sixth interface, where the sixth interface includes information indicating that the newly added second device cannot join the established home theater system.

In this way, after the second device is newly added to the established home theater, the large screen device may automatically discover the newly added second device, and automatically complete networking (establishing a home theater) without an operation of the user. Compared with a manner in which the user needs to manually configure the second device to complete networking each time the user purchases one second device, this manner can reduce complexity of joining the established home theater by the newly added second device, thereby improving user experience.

In a possible implementation, the determining whether a newly added second device in a room in which the first device is located can join an established home theater system may include: determining, based on the first capability information of the m second devices, the second capability information of the newly added second device, and the second condition, whether the newly added second device can join the established home theater system, where the second condition is the condition for establishing a home theater.

According to a second aspect, a first device is provided. The first device includes a processing unit, a display unit, and a transceiver unit.

The transceiver unit is configured to receive m pieces of first capability information from m second devices. The processing unit is configured to obtain placement positions of the m second devices. The processing unit is further configured to determine, based on the placement positions of the m second devices and the m pieces of first capability information, whether the placement positions of the m second devices meet a preset condition. The display unit is configured to: if it is determined that the placement positions of the m second devices do not meet the preset condition, display a first interface. The display unit is further configured to: if it is determined that the placement positions of the m second devices meet the preset condition, display a second interface. Each of the m pieces of first capability information indicates a sound channel supported by a corresponding second device, and m is an integer not less than 1. The preset condition includes placement positions of second devices that support different sound channels during establishment of a home theater, the first interface includes recommendation information of a placement position of at least one of the m second devices, and the second interface includes information indicating that placement succeeds.

In a possible implementation, the processing unit is further configured to obtain placement positions of the m second devices again. The processing unit is further configured to determine, based on the re-obtained placement positions of the m second devices and the m pieces of first capability information, whether the re-obtained placement positions of the m second devices meet the preset condition. The display unit is further configured to: if it is determined that the re-obtained placement positions of the m second devices do not meet the preset condition, display a third interface, where the third interface includes recommendation information of a placement position of at least one of the m second devices; or if it is determined that the re-obtained placement positions of the m second devices meet the preset condition, display a fourth interface, where the fourth interface includes information indicating that placement succeeds.

In a possible implementation, the processing unit is further configured to: after it is determined that the placement positions of the m second devices meet the preset condition, determine sound channel types of the m second devices based on the placement positions of the m second devices. The transceiver unit is further configured to send sound channel configuration information to the m second devices. The sound channel configuration information indicates the sound channel type.

In a possible implementation, the processing unit is further configured to: after it is determined that the re-obtained placement positions of the m second devices meet the preset condition, determine sound channel types of the m second devices based on the re-obtained placement positions of the m second devices. The transceiver unit is further configured to send sound channel configuration information to the m second devices. The sound channel configuration information indicates the sound channel type.

In a possible implementation, the transceiver unit is further configured to broadcast an ultrasonic signal. The ultrasonic signal includes an ultrasonic identifier. The transceiver unit is further configured to broadcast a first message, where the first message includes the ultrasonic identifier. The processing unit is further configured to obtain, based on a first condition, n second devices that are in a same room as the first device, where n is an integer not less than 1, n is not less than m. The first condition includes: receiving a second message.

In a possible implementation, the processing unit is further configured to: if the first condition is met, determine that a second device that sends the second message and the first device are in a same room.

In a possible implementation, the second message includes one or more of the following: an ultrasonic identifier, a signal strength of the ultrasonic signal, and a signal strength of the first message.

The first condition further includes one or more of the following: the ultrasonic identifier included in the second message is consistent with the ultrasonic identifier sent by the first device, the signal strength of the ultrasonic signal is greater than or equal to a first threshold, and the signal strength of the first message is greater than or equal to a second threshold.

Alternatively, the first condition further includes one or more of the following: the ultrasonic identifier included in the second message is consistent with the ultrasonic identifier sent by the first device, a distance corresponding to the signal strength of the ultrasonic signal is less than or equal to a third threshold, and a distance corresponding to the signal strength of the first message is less than or equal to a fourth threshold.

**In** a possible implementation, the processing unit is further configured to obtain the m second devices from the n second devices based on first capability information of the n second devices and a second condition. The first capability information of the m second devices meets the second condition, and the second condition is a condition for establishing a home theater.

**In** a possible implementation, the processing unit is further configured to determine whether a newly added second device in a room in which the first device is located can join an established home theater system, where the established home theater system is established by the first device and the m second devices. The display unit is further configured to: if it is determined that the newly added second device in the room in which the first device is located can join the established home theater system, display a fifth interface based on the m pieces of first capability information, second capability information of the newly added second device, and the preset condition, where the fifth interface includes information indicating a placement position of the newly added second device. The display unit is further configured to: if it is determined that the newly added second device in the room in which the first device is located cannot join the established home theater system, display a sixth interface, where the sixth interface includes information indicating that the newly added second device cannot join the established home theater system.

**In** a possible implementation, the processing unit is further configured to determine, based on the first capability information of the m second devices, the second capability information of the newly added second device, and the second condition, whether the newly added second device can join the established home theater system. The second condition is the condition for establishing a home theater.

It should be noted that the transceiver unit may be separately disposed (for example, a receiving unit and a sending unit), or may be integrated into one module, that is, a transceiver unit. A specific implementation of the transceiver unit is not specifically limited in this application.

Optionally, the first device according to the second aspect may further include a storage unit, and the storage unit stores a program or instructions. When the processing unit executes the program or the instructions, the first device according to the second aspect is enabled to perform the method according to the first aspect.

It should be noted that the first device in the second aspect may be a large screen device or the like, or may be a chip (a system) or another component or assembly that can be disposed in a device such as a large screen device. This is not limited in this application.

**In** addition, for technical effect of the first device according to the second aspect, refer to technical effect of the method according to any one of the possible implementations of the first aspect. Details are not described herein again.

According to a third aspect, a first device is provided. The first device includes a display, one or more processors, and one or more memories. The memory stores one or more programs. When the one or more programs are executed by the one or more processors, the first device is enabled to perform the method according to any one of the possible implementations of the first aspect.

According to a fourth aspect, an embodiment of this application provides a circuit system. The circuit system includes a processing circuit, and the processing circuit is configured to perform the method according to any one of the implementations of the first aspect.

According to a fifth aspect, a communication system is provided. The communication system includes the first device and the second device according to the second aspect. Alternatively, the communication system includes the first device and the second device that are configured to implement the method according to the first aspect and that are described in the second aspect. The second device is configured to send first capability information to the first device, and the first capability information indicates a sound channel supported by the second device. Optionally, there may be one or more second devices.

According to a sixth aspect, a readable storage medium is provided. The readable storage medium includes a program. When the program is run on a device, the device is enabled to perform the method according to any possible implementation of the first aspect.

According to a seventh aspect, a chip system is provided. The chip system includes a processor and a memory. The memory stores a program. When the program is executed by the processor, the processor is enabled to implement the method according to any one of the possible implementations of the first aspect. The chip system may include a chip, or may include a chip and another discrete device.

According to an eighth aspect, a program product is provided. When the program product runs on a computer or a device, the computer or the device is enabled to implement the method according to any one of the possible implementations of the first aspect.

## BRIEF DESCRIPTION OF DRAWINGS

FIG. 1 is a diagram of a communication system to which a method for establishing a home theater is applied according to an embodiment of this application;

FIG. 2 is a diagram of hardware structures of a large screen device and a speaker according to an embodiment of this application;

FIG. 3 is a block diagram of software structures of a large screen device and a speaker according to an embodiment of this application;

FIG. 4 is a schematic flowchart of a method for establishing a home theater according to an embodiment of this application;

FIG. 5 is a diagram of a scenario of establishing a home theater according to an embodiment of this application;

FIG. 6 is a diagram of another scenario of establishing a home theater according to an embodiment of this application;

FIG. 7A is a diagram of still another scenario of establishing a home theater according to an embodiment of this application;

FIG. 7B is a diagram of yet another scenario of establishing a home theater according to an embodiment of this application;

FIG. 8 is a schematic flowchart of another method for establishing a home theater according to an embodiment of this application;

FIG. 9A and FIG. 9B are a schematic flowchart of still another method for establishing a home theater according to an embodiment of this application;

FIG. 10A is a diagram of sending a first ultrasonic signal and a second ultrasonic signal according to an embodiment of this application;

FIG. 10B is a diagram of a waveform of a frequency modulated continuous wave according to an embodiment of this application;

FIG. 10C is another diagram of sending a first ultrasonic signal and a second ultrasonic signal according to an embodiment of this application;

FIG. 11 is a diagram of a double-sided two-way ranging method according to an embodiment of this application;

FIG. 12A(a) and FIG. 12A(b) are a diagram of still yet another scenario of establishing a home theater according to an embodiment of this application;

FIG. 12B is a diagram of a further scenario of establishing a home theater according to an embodiment of this application;

FIG. 13 is a schematic flowchart of yet another method for establishing a home theater according to an embodiment of this application;

FIG. 14 is a diagram of a still further scenario of establishing a home theater according to an embodiment of this application; and

FIG. 15 is a diagram of a structure of a device according to an embodiment of this application.

## DESCRIPTION OF EMBODIMENTS

The following describes technical solutions in embodiments of this application with reference to accompanying drawings in embodiments of this application. In descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the word "example", "for example", or the like is used to give an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

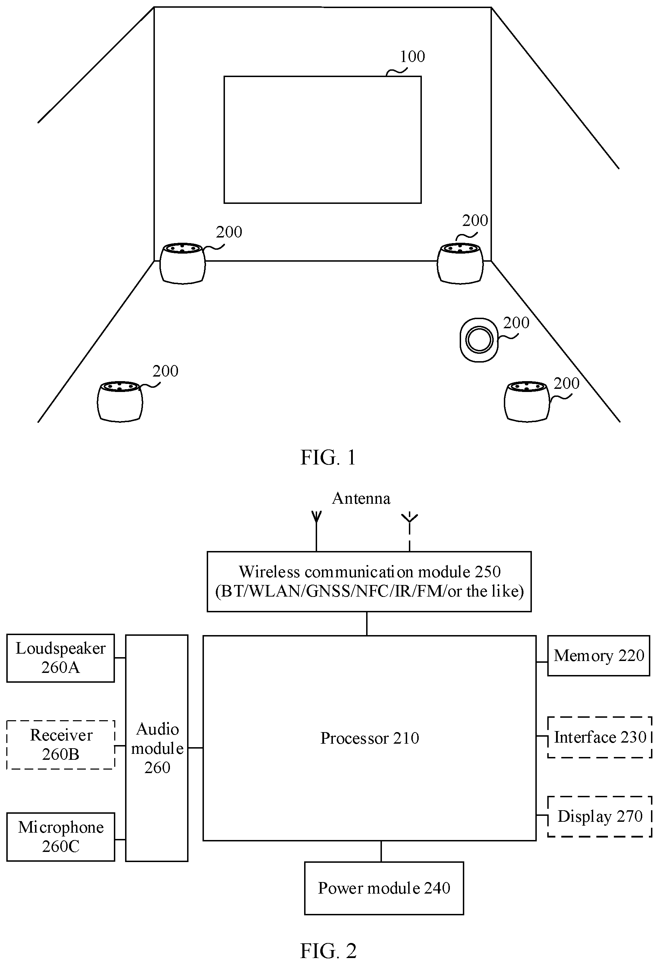

For example, FIG. 1 is a diagram of a communication system to which a method for establishing a home theater is applied according to an embodiment of this application.

The method for establishing a home theater provided in embodiments of this application is applied to the communication system (which may also be re-

11 **EP 4 622 297 A1** 12

ferred to as a home theater system). As shown in FIG. 1, the communication system includes a first device 100 and at least one second device 200.

The first device 100 includes but is not limited to a device, for example, a large screen device, a smart screen, a television, a smart projector, a smart display, a digital versatile disc player, or an audio and video disc player. A specific form of the first device 100 is not specially limited in embodiments of this application. An operating system installed on the first device 100 includes but is not limited to iOS®, Android®, Harmony®, Windows®, Linux®, or another operating system. A specific type of the first device 100 and the operating system installed on the first device 100 are not limited in this application.

The second device 200 includes but is not limited to an audio device, for example, a sounder, a speaker, or a smart speaker. A specific form of the second device 200 is not specially limited in embodiments of this application. An operating system installed on the second device 200 includes but is not limited to iOS®, Android®, Harmony®, Windows®, Linux®, or another operating system. A specific type of the second device 200 and the operating system installed on the second device 200 are not limited in this application. In some examples, the first device 100 may prompt a placement position of the at least one second device 200, and the first device 100 may allocate a sound channel to the at least one second device 200.

In some examples, the first device 100 may alternatively be an audio device, for example, a sounder, a speaker, or a smart speaker. For example, the communication system may include at least two speakers, where one speaker may prompt a user with a placement position of each speaker in the communication system, and allocate a sound channel to each speaker. Optionally, the communication system may further include but is not limited to an audio/a video playing device, for example, a mobile phone, a smart screen, a television, a smart projector, a smart display, a digital versatile disc player, or an audio and video disc player.

Optionally, the first device 100 may establish a communication connection to the second device 200 by using a wireless or wired communication technology. The wireless communication technology includes but is not limited to at least one of the following: near field communication (near field communication, NFC), Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), ZigBee (ZigBee), frequency modulation (frequency modulation, FM), infrared (infrared, IR), ultra-wideband (ultra-wideband, UWB), or the like.

In some embodiments, both the first device 100 and the second device 200 support a proximity discovery function. For example, after the first device 100 approaches the second device 200, the first device 100 and the second device 200 can discover each other, and then may establish a wireless communication connection, for example, a Wi-Fi peer-to-peer (peer-to-peer, P2P) connection, a Bluetooth connection, or a UWB connection, or may further establish a wireless communication connection supported by using a future connection technology.

Optionally, the first device 100 and the second device 200 establish a wireless communication connection through a local area network. For example, both the first device 100 and the second device 200 are connected to a same router, and may discover each other and establish a wireless communication connection.

Optionally, the first device 100 and the second device 200 may alternatively establish a communication connection to each other through a third-party device in the local area network. The third-party device is, for example, a router, a gateway, a smart device controller, a server, or a wireless access point (access point, AP) device.

In an example, the communication system further includes a routing device (for example, a router). The routing device is configured to connect to the local area network or the internet. For example, one or more routers are deployed in the home theater to constitute a local area network, or to access the local area network or the internet. The first device 100 or the second device 200 accesses the router, and performs data transmission with a device in the local area network or a device in the internet through a Wi-Fi channel established by the router.

In an example, the communication system further includes a server (for example, a cloud server). For example, the routing device or the gateway may send information (such as a placement position rule) in the server to the first device 100 or the second device 200. The server may further store one or more ultrasonic algorithm models, or may store a part of an ultrasonic algorithm model, and the other part of the ultrasonic algorithm model may be deployed in the first device 100 or the second device 200. The ultrasonic algorithm model is used to identify and parse an ultrasonic signal. After parsing the ultrasonic signal by using the ultrasonic algorithm model, the server may send information obtained through parsing to the first device 100 and/or the second device 200 through the routing device or the gateway.

The foregoing content is merely some descriptions of the method for establishing a home theater provided in embodiments of this application. It should be noted that, in the examples or optional manners described above, any content may be freely combined, and combined content also falls within the scope of this application.

For example, the first device 100 is a large screen device, and the second device 200 is a speaker. FIG. 2 is a diagram of hardware structures of a large screen device and a speaker according to an embodiment of this application.

As shown in FIG. 2, the large screen device may include a processor 210, a memory 220, a power module 240, a wireless communication module 250, an audio module 260, a loudspeaker 260A, a microphone 260C, a display 270, and the like. Optionally, the large screen device may further include an interface 230, a receiver 260B, and the like.

The speaker may include a processor 210, a memory 220, a power module 240, a wireless communication module 250, an audio module 260, a loudspeaker 260A, a receiver 260B, a microphone 260C, and the like. Optionally, the speaker may further include an interface 230, a display 270, and the like.

It may be understood that the structures shown in this embodiment of this application do not constitute a specific limitation on the first device 100 and the second device 200. In some other embodiments of this application, the first device 100 and the second device 200 may include more or fewer components than those shown in the figure, or a combination of a part of the components, or splits from a part of the components, or an arrangement of different components. The components shown in the figure may be implemented by hardware, software, or a combination of software and hardware. In addition, an interface connection relationship between the modules shown in FIG. 2 is only an example for description, and constitutes no limitation on the structures of the first device 100 and the second device 200. In some other embodiments of this application, the first device 100 and the second device 200 may alternatively use an interface connection manner different from that in FIG. 2, or use a combination of a plurality of interface connection manners.

The processor 210 may include one or more processing units. For example, the processor 210 may include an application processor (application processor, AP), a modem processor, a graphics processing unit (graphics processing unit, GPU), an image signal processor (image signal processor, ISP), a video codec, and a digital signal processor (digital signal processor, DSP). Different processing units may be independent devices, or may be integrated into one or more processors.

The memory 220 may be configured to store executable program code. The executable program code includes instructions. For example, the memory 220 may further store data processed by the processor 210. In addition, the memory 220 may include a high-speed random access memory, or may include a nonvolatile memory, for example, at least one magnetic disk storage device, or a flash storage device. The processor 210 runs the instructions stored in the memory 220 and/or instructions stored in a memory disposed in the processor, to perform various function applications and data processing of the speaker or the large screen device.

The interface 230 may be an interface that conforms to a USB standard specification, and may be specifically a mini USB interface, a micro USB interface, a USB type-C interface, or the like. The interface 230 may be configured to connect to a charger to charge the speaker or the large screen device, or may be configured to transmit data between the speaker or the large screen device and a peripheral device.

The power module 240 is configured to supply power to each component of the speaker or the large screen device, for example, the processor 210 and the memory 220.

The wireless communication module 250 may provide a wireless communication solution that is applied to the speaker or the large screen device, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and ZigBee (ZigBee). The wireless communication module 250 may be one or more devices integrating at least one communication processing module. The wireless communication module 250 receives an electromagnetic wave over an antenna, performs frequency modulation and filtering processing on an electromagnetic wave signal, and sends a processed signal to the processor 210. The wireless communication module 250 may further receive a to-be-sent signal from the processor 210, perform frequency modulation and amplification on the signal, and convert the signal into an electromagnetic wave for radiation through the antenna.

The speaker or the large screen device may implement an audio function, for example, music playing and recording, through the audio module 260, the loudspeaker 260A, the receiver 260B, the microphone 260C, the application processor, and the like.

The audio module 260 is configured to convert digital audio information into an analog audio signal output, and is also configured to convert an analog audio input into a digital audio signal. The audio module 260 may be further configured to encode and decode an audio signal. In some embodiments, the audio module 260 may be disposed in the processor 210, or some functional modules of the audio module 260 may be disposed in the processor 210.

The loudspeaker 260A, also referred to as a "horn", is configured to convert an audio electrical signal into a sound signal. The speaker or the large screen device may listen to an audio through the loudspeaker 260A. The loudspeaker 260A may be further configured to send an ultrasonic audio signal (referred to as an "ultrasonic signal" below). A lower frequency limit of the ultrasonic wave is greater than an auditory upper limit of a person, and a normal person cannot hear the ultrasonic signal.

The receiver 260B, also referred to as an "earpiece", is configured to convert an audio electrical signal into a sound signal.

The microphone 260C, also referred to as a "mike" or a "mic", is configured to convert a sound signal into an electrical signal. A user may make a sound near the microphone 260C through the mouth of the user, to input a sound signal to the microphone 260C. The loudspeaker 260A may be further configured to receive an ultrasonic signal, to complete ultrasonic sound receiving.

The display 270 is configured to display an image, a video, a text, and the like. The display 270 includes a display panel.

It may be understood that the foregoing is merely an example for describing a structure of the first device 100 or the second device 200 in this embodiment of this application, but does not constitute a limitation on a structure and a form of the first device 100 or the second device 200. The structure and the form of the first device 100 or the second device 200 are not limited in embodiments of this application.

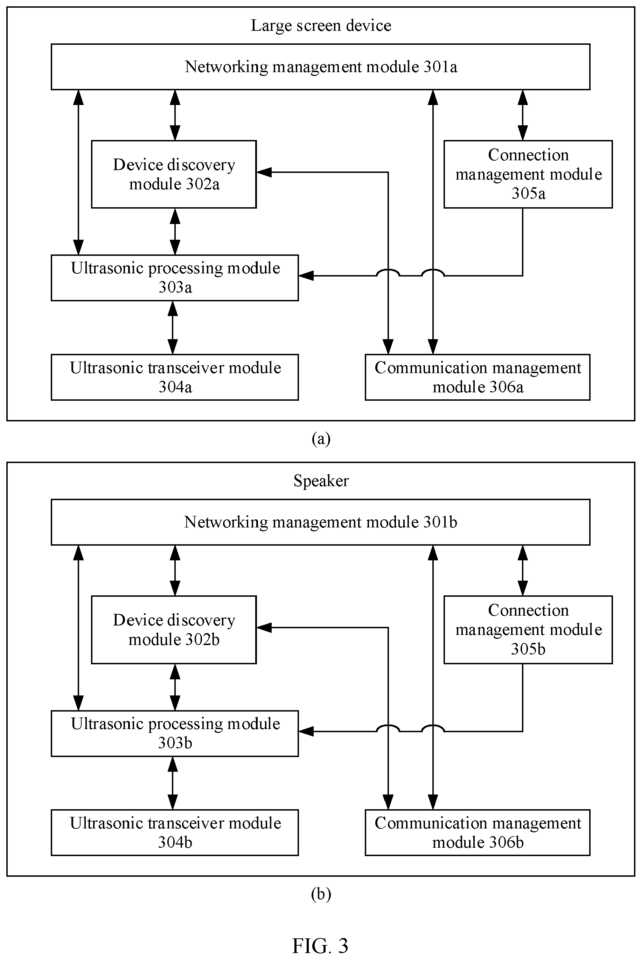

For example, a software architecture of a terminal may be a layered architecture, an event-driven architecture, a microkernel architecture, a microservice architecture, a cloud architecture, or the like. FIG. 3 is a block diagram of software structures of a first device 100 (for example, a large screen device) and a second device 200 (for example, a speaker) according to an embodiment of this application.

As shown in (a) in FIG. 3, the large screen device includes but is not limited to one or more of the following software modules: a networking management module 301a, a device discovery module 302a, an ultrasonic processing module 303a, an ultrasonic transceiver module 304a, a connection management module 305a, and a communication management module 306a.

As shown in (b) in FIG. 3, the speaker includes but is not limited to one or more of the following software modules: a networking management module 301b, a device discovery module 302b, an ultrasonic processing module 303b, an ultrasonic transceiver module 304b, a connection management module 305b, and a communication management module 306b.

The networking management module 301a is configured to control networking (also referred to as establishing a home theater) logic of the large screen device, and invoke each module to complete an entire networking procedure.

The networking management module 301b is configured to control networking (also referred to as establishing a home theater) logic of the speaker, and invoke each module to complete an entire networking procedure.

The device discovery module 302a is configured to implement a capability to discover and a capability to be discovered of the large screen device. For example, the device discovery module 302a may be configured to discover the speaker.

The device discovery module 302b is configured to implement a capability to discover and a capability to be discovered of the speaker. For example, the device discovery module 302b may be configured to broadcast a discovery packet, so that the speaker is discovered by the large screen device.

The ultrasonic processing module 303a is configured to process an ultrasonic signal received or sent by the large screen device.

The ultrasonic processing module 303b is configured to process an ultrasonic signal received or sent by the speaker.

The ultrasonic transceiver module 304a is configured to: receive an ultrasonic signal through a microphone of the large screen device, and play an ultrasonic signal through a loudspeaker of the large screen device.

The ultrasonic transceiver module 304b is configured to: receive an ultrasonic signal through a microphone of the speaker, and play an ultrasonic signal through a loudspeaker of the speaker.

The connection management module 305a is configured to: after a communication connection between the large screen device and the speaker is disconnected, when the large screen device is powered on, trigger the large screen device to restore the communication connection to the speaker.

The connection management module 305b is configured to: after a communication connection between the large screen device and the speaker is disconnected, when the large screen device is powered on, make the speaker restore the communication connection to the large screen device.

The communication management module 306a is configured to manage a communication connection of the large screen device, for example, manage wireless communication connections such as Wi-Fi, UWB, NFC, and Bluetooth.

The communication management module 306b is configured to manage a communication connection of the speaker, for example, manage wireless communication connections such as Wi-Fi, UWB, NFC, and Bluetooth.

For example, a large screen device includes an Android system with a layered architecture and a speaker includes an Android system with a layered architecture. Operating systems of the large screen device and the speaker each may include an application layer, an application framework layer, a system library, an Android runtime, and a kernel layer. For example, the networking management module 301a, the device discovery module 302a, the ultrasonic processing module 303a, the ultrasonic transceiver module 304a, the connection management module 305a, and the communication management module 306a may be located at the application framework layer of the operating system of the large screen device. The networking management module 301b, the device discovery module 302b, the ultrasonic processing module 303b, the ultrasonic transceiver module 304b, the connection management module 305b, and the communication management module 306b may be located at the application framework layer of the operating system of the speaker. The application framework layer may provide an application programming interface (application programming interface, API) and a programming framework for an application at the application layer. For specific descriptions of the operating system and the layers (for example, the application layer, the application framework layer, the system library, the Android runtime, and the kernel layer of the Android system), refer to explanations and descriptions in a conventional technology. Details are not described in embodiments of this application.

It may be understood that the software modules included in the first device and the second device shown in FIG. 3 are merely used as a possible division manner, and may alternatively include more or fewer modules, or may be divided in another manner. This is not limited in this application.

All technical solutions in the following embodiments may be implemented in an apparatus with the structure shown in FIG. 2 and/or FIG. 3.

It may be understood that, in embodiments of this application, the first device 100 or the second device 200 may perform some or all steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

The following describes the method provided in embodiments of this application by using an example in which the first device 100 is the large screen device and the second device 200 is the speaker. The method provided in embodiments of this application is also applicable to a scenario in which the first device 100 is another device, for example, a speaker, and the second device 200 is the speaker. A primary speaker (for example, a center-channel speaker) may perform a function corresponding to the large screen device in the following embodiments.

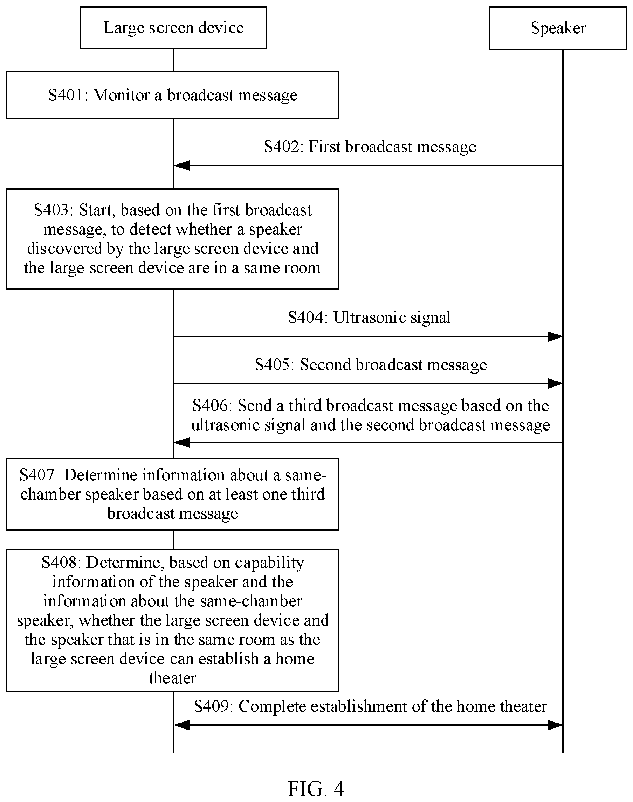

The following describes in detail the method for establishing a home theater provided in embodiments of this application with reference to FIG. 4 to FIG. 14.

For example, FIG. 4 is a schematic flowchart of a method for establishing a home theater according to an embodiment of this application. FIG. 4 describes a scenario in which a large screen device detects a speaker in a same room as the large screen device. There may be one or more speakers, and the same room may be a same space, a same chamber, a same waiting hall, or the like. The room may be a living room, a bedroom, a study, a waiting hall, or the like. In this embodiment of this application, the same room is used as an example for description. As shown in FIG. 4, the method includes the following steps.

S401: The large screen device monitors a broadcast message.

Optionally, the broadcast message may be sent by the speaker according to a wireless communication technology (or referred to as a short-range communication technology), for example, broadcast according to a technology such as a WLAN, a Wi-Fi P2P, a UWB, or Bluetooth. Correspondingly, that the large screen monitors the broadcast message from the speaker may include: The large screen device may monitor a WLAN (for example, Wi-Fi) broadcast, perform WLAN scanning, monitor a UWB broadcast, perform Bluetooth scanning, or the like.

For example, the large screen device may continuously (for example, periodically) monitor the broadcast message. In this way, it can be ensured that a first broadcast message sent by the speaker described in the following S402 is detected.

In an implementation, a device discovery module 302a and a communication management module 306a of the large screen device may support the large screen device in monitoring the broadcast message from the speaker.

S402: The speaker sends the first broadcast message.

For example, the first broadcast message may be used by the large screen device to discover the speaker.

Optionally, the first broadcast message includes capability information (which may also be referred to as first capability information) of the speaker, and the capability information indicates a sound channel supported by the speaker. For example, the capability information of the speaker includes but is not limited to one or more of the following: supporting in using as a left-placed speaker, supporting in using as a right-placed speaker, supporting in using as a center-channel speaker, supporting in using as a left surround speaker, supporting in using as a right surround speaker, and supporting in using as a subwoofer.

For example, if the capability information of the speaker includes: supporting in using as a left-placed speaker and a right-placed speaker, and supporting in using as a left surround speaker and a right surround speaker, it may implicitly indicate that the speaker does not support being used as a center-channel speaker and does not support being used as a subwoofer. Details are not described one by one in this application.

Optionally, the first broadcast message may further include an identifier of the speaker. For example, the identifier of the speaker may be a product serial number (serial number, SN). The large screen device receives the identifier and the capability information of the speaker, and may obtain the capability information corresponding to the speaker.

Optionally, the first broadcast message may be a Wi-Fi broadcast message, a beacon (beacon) frame, a UWB broadcast message, a Bluetooth (for example, BLE) broadcast message, or the like. The speaker may send the first broadcast message according to the wireless communication technology such as the WLAN, the Wi-Fi P2P, the UWB, or Bluetooth.

For example, there may be one or more speakers, and capability information of different speakers may be different. When there are a plurality of speakers, each of the plurality of speakers may perform S402 to send a first broadcast message to the large screen device, and the large screen device may receive first broadcast messages from the plurality of speakers. In this way, the large screen device may discover a speaker around the large screen device by monitoring a broadcast message from the speaker.

In an implementation, the speaker may send the first broadcast message through a device discovery module 302b and a communication management module 306b.

S403: The large screen device starts, based on the first broadcast message, to detect whether a speaker discovered by the large screen device and the large screen device are in a same room.

For example, after the large screen device receives a first broadcast message of a speaker around the large screen device, the large screen device starts to detect whether the speaker discovered by the large screen device and the large screen device are in a same room (for example, starts to perform the following S404 and steps after S404), and determines whether the speaker discovered by the large screen device and the large screen device are in the same room.

Optionally, after the large screen device monitors the broadcast message for a period of time and receives the first broadcast message, the large screen device may start to detect whether the speaker discovered by the large screen device and the large screen device are in the same room. In this way, the large screen device can start to detect, only after the large screen device receives broadcast messages from all surrounding speakers, whether the speakers discovered by the large screen device and the large screen device are in a same room, to prevent the large screen device from starting to detect, after receiving a first broadcast message from one speaker, whether the speaker discovered by the large screen device and the large screen device are in a same room. This can improve accuracy of establishing a home theater.

In some embodiments, the large screen device displays a first establishment decision interface based on the first broadcast message, and starts, based on an operation of determining to establish a home theater by the user in the first establishment decision interface, to detect whether the speaker discovered by the large screen device and the large screen device are in the same room.

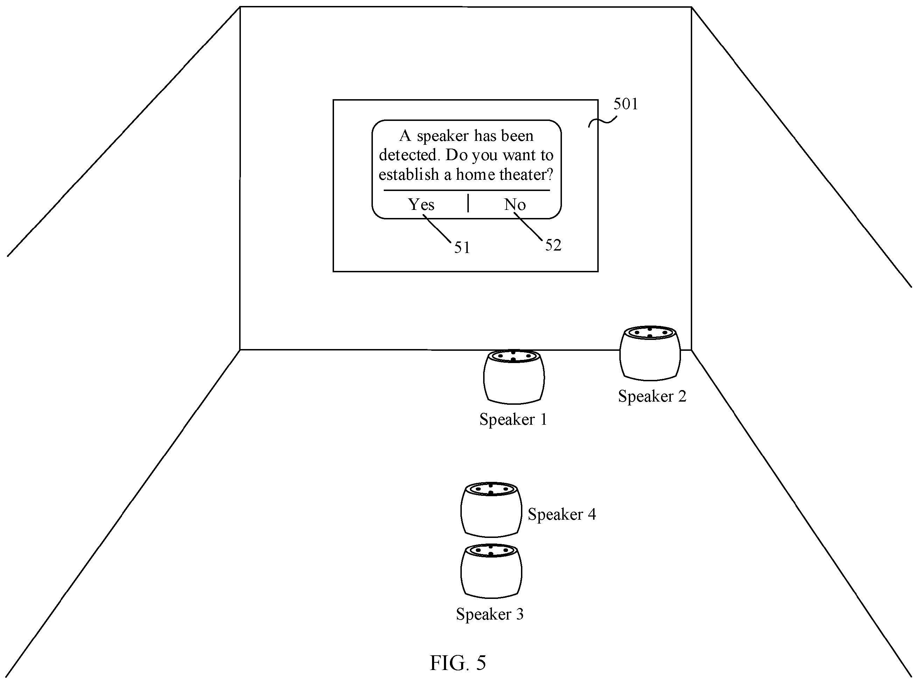

With reference to FIG. 5, after receiving first broadcast messages from a speaker 1 to a speaker 4, the large screen device displays a first establishment decision interface 501. After the large screen device detects an operation of tapping a "Yes" control 51 by the user, the large screen device starts to detect whether the speaker discovered by the large screen device and the large screen device are in a same room. After the large screen device detects an operation of tapping a "No" control 52 by the user, the large screen device does not perform the step of determining to start to detect whether the speaker discovered by the large screen device and the large screen device are in a same room, and ends establishment of the home theater.

S404: The large screen device sends an ultrasonic signal.

For example, the ultrasonic signal includes an ultrasonic identifier. For example, the ultrasonic identifier may be a random code or an ultrasonic model. In other words, the ultrasonic signal may be identified based on the random code or the ultrasonic model.

Optionally, the large screen device may periodically send the ultrasonic signal.

For example, with reference to FIG. 2, the first device 100 is the large screen device, and the loudspeaker 260A of the large screen device broadcasts the ultrasonic signal.

In an implementation, with reference to FIG. 2 and FIG. 3, the large screen device may control, through the ultrasonic transceiver module 304a, the loudspeaker 260A to broadcast the ultrasonic signal.

S405: The large screen device sends a second broadcast message.

For example, the second broadcast message includes the ultrasonic identifier, and the second broadcast message may also be referred to as a first message.

Similar to the first broadcast message, the second broadcast message may be a Wi-Fi broadcast message, a beacon frame, a UWB broadcast message, a Bluetooth broadcast message, or the like. The large screen device may send the second broadcast message according to the wireless communication technology such as the WLAN, the Wi-Fi P2P, the UWB, or Bluetooth.

Optionally, the large screen device may periodically send the second broadcast message.

For example, with reference to FIG. 2, the wireless communication module 250 of the large screen device broadcasts the second broadcast message.

In an implementation, with reference to FIG. 3, the large screen device may broadcast the second broadcast message through the communication management module 306a.

It should be noted that a sequence of S404 and S405 is not limited in this application.

S406: The speaker sends a third broadcast message based on the ultrasonic signal and the second broadcast message.

For example, the third broadcast message (which may also be referred to as a second message) includes the ultrasonic identifier, and may further include but is not limited to one or more of the following: the identifier of the speaker, first signal strength indication information, and second signal strength indication information.

The ultrasonic identifier included in the third broadcast message is the ultrasonic identifier included in the ultrasonic signal or the second broadcast message.

The first signal strength indication information indicates a signal strength of the ultrasonic signal. For example, the first signal strength indication information may be a received signal strength indicator (received signal strength indicator, RSSI) of the ultrasonic signal.

The second signal strength indication information indicates a signal strength of the second broadcast message. For example, the second signal strength indication information may be an RSSI of the second broadcast message.

Similar to the first broadcast message, the third broadcast message may be a Wi-Fi broadcast message, a beacon frame, a UWB broadcast message, a Bluetooth broadcast message, or the like. The speaker may send the third broadcast message by using the wireless communication technology such as the WLAN, the Wi-Fi P2P, the UWB, or Bluetooth.

In some embodiments, the speaker parses the ultrasonic signal and the second broadcast message to obtain the ultrasonic identifier. The speaker receives the ultrasonic signal, and measures the signal strength of the ultrasonic signal to obtain the first signal strength indication information. The speaker receives the second broadcast message, and measures the signal strength of the second broadcast message to obtain the second signal strength indication information.

A sequence of obtaining the first signal strength indication information and the second signal strength indication information is not limited in this application.

In some embodiments, if the speaker receives the ultrasonic signal and the second broadcast message, the speaker sends the third broadcast message; or if the speaker fails to receive the ultrasonic signal and the second broadcast message, the speaker does not send the third broadcast message.

For example, if the speaker receives the second broadcast message but fails to receive the ultrasonic signal, the speaker does not broadcast the third broadcast message. This can improve accuracy of determining, by the large screen device, the speaker that is in the same room as the large screen device.

For example, an ultrasonic wave (an ultrasonic signal) cannot penetrate an obstacle, and a speaker at a home of a neighbor home (home of a user B) fails to receive an ultrasonic signal sent by a large screen device (at a home of a user A). The second broadcast message (for example, a Bluetooth signal, a UWB signal, a Wi-Fi signal, or a beacon frame) can penetrate the obstacle, and the speaker at the home of the neighbor may receive a second broadcast message broadcast by the large screen device. If the speaker receives the second broadcast message but fails to receive the ultrasonic signal, it indicates that the speaker and the large screen are not in a same room, and the speaker may be the speaker at the home of the neighbor. In this case, the speaker does not broadcast the third broadcast message.

For example, if the speaker receives the ultrasonic signal but fails to receive the second broadcast message, the speaker does not broadcast the third broadcast message. The ultrasonic signal may be an interference signal sent by another ultrasonic source. The large screen device does not detect a speaker that is in a same room as the large screen device (for example, does not perform same-chamber detection), and the speaker does not need to send the third broadcast message. This can improve accuracy of determining, by the large screen device, the speaker that is in the same room as the large screen device.

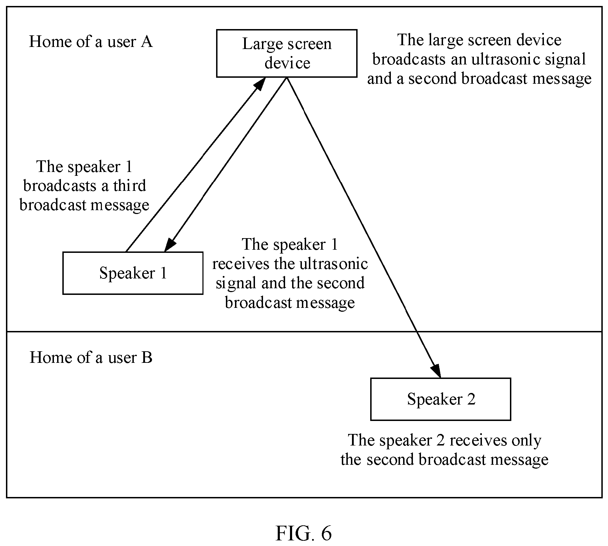

As shown in FIG. 6, a large screen device at the home of the user A broadcasts an ultrasonic signal and a second broadcast message. A speaker 1 at the home of the user A receives the ultrasonic signal and the second broadcast message, and broadcasts a third broadcast message. Because the ultrasonic signal cannot penetrate a wall, a speaker 2 at the home of the user B receives only the second broadcast message, fails to receive the ultrasonic signal, and does not send a third broadcast message. In this way, a speaker that is not in a same room as the large screen device may be excluded.

In some embodiments, if the speaker receives the ultrasonic signal and the second broadcast message, and the ultrasonic identifier in the ultrasonic signal is consistent with the ultrasonic identifier in the second broadcast message, the speaker sends the third broadcast message; or if the speaker receives the ultrasonic signal and the second broadcast message, and the ultrasonic identifier in the ultrasonic signal is inconsistent with the ultrasonic identifier in the second broadcast message, the speaker does not send the third broadcast message.

For example, that the ultrasonic identifier in the ultrasonic signal is consistent with (or matches) the ultrasonic identifier in the second broadcast message indicates that the ultrasonic identifier in the ultrasonic signal and the ultrasonic identifier in the second broadcast message are the same, or identify a same ultrasonic signal. For example, the ultrasonic identifier in the ultrasonic signal is a random code, and the ultrasonic identifier in the second broadcast message is an ultrasonic model. If the random code and the ultrasonic model identify a same ultrasonic signal, the third broadcast message is sent; or if the random code and the ultrasonic model cannot identify a same ultrasonic signal, the third broadcast message is not sent.

For example, it is assumed that the speaker receives the ultrasonic signal and the broadcast message. If the ultrasonic signal and/or the broadcast message do/does not include the ultrasonic identifier, or the ultrasonic identifier in the ultrasonic signal is inconsistent with the ultrasonic identifier in the broadcast message, the third broadcast message is not sent.

In this way, whether the ultrasonic identifier in the ultrasonic signal is consistent with the ultrasonic identifier in the second broadcast message is determined, so that it can be ensured that the ultrasonic signal and the second broadcast message that are received by the speaker are sent by a same device, and a scenario in which the large screen device does not detect the speaker that is in the same room as the large screen device is excluded. This prevents the speaker from incorrectly feeding back the third broadcast message, and further improves accuracy of detecting, by the large screen device, the speaker that is in the same room as the large screen device.

For example, there may be one or more speakers. When there are a plurality of speakers, each of the plurality of speakers may perform S406, that is, send the third broadcast message based on the ultrasonic signal and the second broadcast message, and the large screen device may receive third broadcast messages of the plurality of speakers.

In the method shown in FIG. 4, an example in which no communication connection is established between the large screen device and the speaker is used. The large screen device and the speaker exchange information through an ultrasonic signal and a broadcast message, and no communication connection is established. This can reduce time for establishing the communication connection, and improves efficiency of establishing a home theater.

Certainly, before S401, a communication connection may have been established between the large screen device and the speaker. Corresponding to S402, the speaker sends the capability information of the speaker to the large screen device through the communication connection, and may further send the identifier of the speaker. Corresponding to S405, the large screen device sends a message including the ultrasonic identifier to the speaker through the communication connection. Corresponding to S406, the speaker sends a message to the large screen device through the communication connection. For information included in the message, refer to the third broadcast message.

S407: The large screen device determines information about a same-chamber speaker based on at least one third broadcast message.

For example, the information about the same-chamber speaker indicates a speaker in a same room as the large screen device.

For example, the large screen device determines, based on the third broadcast message, whether the corresponding speaker and the large screen device are in a same room. If the speaker and the large screen device are in a same room, the speaker indicated by the information about the same-chamber speaker includes the speaker.

In some embodiments, if a first condition is met, the large screen device determines that the speaker and the large screen device are in a same room; or if a first condition is not met, the large screen device determines that the speaker and the large screen device are not in a same room.

For example, the first condition includes: The large screen device receives the third broadcast message from the speaker. In other words, if the large screen device receives the third broadcast message, it is considered that the speaker corresponding to the third broadcast message and the large screen device are in a same room.

For example, the large screen device finds some speakers, for example, a speaker a and a speaker b, based on the first broadcast message (refer to S402). If the large screen device receives a third broadcast message from the speaker a, but fails to receive a third broadcast message from the speaker b, it is determined that the speaker a and the large screen device are in a same room, the speaker b and the large screen device are in different rooms.

Optionally, the first condition may further include: The ultrasonic identifier included in the third broadcast message is consistent with (or matches) the ultrasonic identifier included in the ultrasonic signal, the signal strength of the ultrasonic signal is greater than or equal to a first threshold, and/or the signal strength of the second broadcast message is greater than or equal to a second threshold. Alternatively, the first condition may further include: The ultrasonic identifier included in the third broadcast message is consistent with (or matches) the ultrasonic identifier included in the ultrasonic signal, and a distance corresponding to the signal strength of the ultrasonic signal is less than or equal to a third threshold, and/or a distance corresponding to the signal strength of the second broadcast message is less than or equal to a fourth threshold.

In other words, the large screen device may further determine, based on the ultrasonic identifier and/or a distance between the large screen device and the speaker that are/is included in the third broadcast message, whether the speaker and the large screen device are in a same room.

For example, that the ultrasonic identifier included in the third broadcast message is consistent with (or matches) the ultrasonic identifier included in the ultrasonic signal indicates that the ultrasonic identifier included in the third broadcast message and the ultrasonic identifier included in the ultrasonic signal are the same, or identify a same ultrasonic signal.

For example, the third broadcast message includes an ultrasonic identifier. If the ultrasonic identifier in the ultrasonic signal is inconsistent with the ultrasonic identifier in the third broadcast message, it is considered that the speaker and the large screen device are in different rooms (for example, the third broadcast message may be an interference broadcast). If the ultrasonic identifier in the ultrasonic signal is consistent with the ultrasonic identifier in the third broadcast message, it is considered that the speaker and the large screen device are in a same room.

For example, the third broadcast message includes the first signal strength indication information. The large screen device determines whether a signal strength of an ultrasonic signal sent by the large screen device is greater than or equal to the first threshold. If the signal strength of the ultrasonic signal sent by the large screen device is greater than or equal to the first threshold, it is considered that the speaker and the large screen device are in a same room; or if the signal strength of the ultrasonic signal sent by the large screen device is less than the first threshold, it is considered that the speaker and the large screen device are in different rooms. Similarly, the third broadcast message includes the second signal strength indication information. The large screen device determines whether a signal strength of the second broadcast message sent by the large screen device is greater than or equal to the second threshold. If the signal strength of the second broadcast message sent by the large screen device is greater than or equal to the second threshold, it is considered that the speaker and the large screen device are in a same room; or if the signal strength of the second broadcast message sent by the large screen device is less than the second threshold, it is considered that the speaker and the large screen device are in different rooms.

Optionally, the first threshold and the second threshold may be preset or configurable. For example, the user configures the first threshold and the second threshold in an interface of the large screen device based on a size of the room, or the large screen device determines the first threshold and the second threshold based on a size of the room entered by the user, correspondences between different room sizes and the first threshold and the second threshold may be preconfigured in the large screen device or a server (the correspondences may be obtained from the server by the large screen device). A value of the first threshold may be the same as or different from a value of the second threshold.

For example, the third broadcast message includes the first signal strength indication information. The large screen device determines, based on the first signal strength indication information and a first correspondence, whether a distance corresponding to a signal strength of an ultrasonic signal sent by the large screen device is less than or equal to the third threshold. If the distance corresponding to the signal strength of the ultrasonic signal sent by the large screen device is less than or equal to the third threshold, it is considered that the speaker and the large screen device are in a same room; or if the distance corresponding to the signal strength of the ultrasonic signal sent by the large screen device is greater than the third threshold, it is considered that the speaker and the large screen device are in different rooms.

Similarly, the third broadcast message includes the second signal strength indication information. The large screen device determines, based on the second signal strength indication information and the first correspondence, whether a distance corresponding to a signal strength of the second broadcast message is less than or equal to the fourth threshold. If the distance corresponding to the signal strength of the second broadcast message is less than or equal to the fourth threshold, it is considered that the speaker and the large screen device are in a same room; or if the distance corresponding to the signal strength of the second broadcast message is greater than the fourth threshold, it is considered that the speaker and the large screen device are in different rooms.

Optionally, the first correspondence may include a correspondence between an ultrasonic signal strength and a distance, and/or a correspondence between a signal strength of the second broadcast message and a distance. It is assumed that the second broadcast message is a Bluetooth broadcast message, and the correspondence between the signal strength of the second broadcast message and the distance may be a correspondence between a signal strength of the Bluetooth broadcast message and the distance. Details are not described one by one again.

In some embodiments, the large screen device obtains, based on the first signal strength indication information from the correspondence between the ultrasonic signal strength and the distance, a distance corresponding to a signal strength of an ultrasonic signal sent by the large screen device, that is, a distance between the large screen device and the speaker, and further determines a relationship between the distance and the third threshold.

Similarly, the large screen device obtains, based on the second signal strength indication information from the correspondence between the signal strength of the second broadcast message and the distance, a distance corresponding to the signal strength of the second broadcast message sent by the large screen device, that is, a distance between the large screen device and the speaker, and further determines a relationship between the distance and the fourth threshold.

For example, the first correspondence may be preconfigured in the large screen device or the server (the first correspondence may be obtained from the server by the large screen device).

For example, before the large screen device is delivered from a factory, the first correspondence is measured and stored in the large screen device. For example, an ultrasonic signal is used as an example. After a signal strength y of an ultrasonic signal sent by a large screen device that is x meters (centimeters, or the like) away from the speaker is measured (a plurality of different distances may be selected for measurement), a correspondence between the signal strength y and a distance x is stored in the large screen.

Optionally, the large screen device may store first correspondences respectively corresponding to N speakers, where N is an integer greater than or equal to 1. Due to a hardware reason of the speaker (for example, antennas of different speakers may be different), when the large screen device sends signals at a same distance, signal strengths obtained by different speakers (for example, speakers of different models) may be different. Therefore, first correspondences of the different speakers may be different. The large screen device may obtain, based on the identifier of the speaker, the first correspondence corresponding to the speaker.

For example, similar to the first threshold and the second threshold, the third threshold and the fourth threshold may be preset or configurable. For example, the user configures the third threshold and the fourth threshold in the interface of the large screen device based on a size of the room, or the large screen device determines the third threshold and the fourth threshold based on a size of the room entered by the user. Correspondences between different room sizes, and the third threshold and the fourth threshold may be preconfigured in the large screen device or the server (the correspondences may be obtained from the server by the large screen device). A value of the third threshold may be the same as or different from a value of the fourth threshold.

S408: The large screen device determines, based on the capability information of the speaker and the information about the same-chamber speaker, whether the large screen device and the speaker that is in the same room as the large screen device can establish a home theater.

Optionally, the capability information of the speaker may be received by the large screen device through the first broadcast message, or may be received through a third broadcast message (the third broadcast message may further include the capability information of the speaker), or may be received through another message. For example, the speaker sends the capability information of the speaker to the large screen device through a separate broadcast message, provided that the large screen device receives the capability information of the speaker before S408.

For example, the large screen device may determine, by determining whether a (at least one) speaker in a same room as the large screen device meets a condition (which may also be referred to as a second condition) for establishing a home theater, whether the large screen device and the speaker in the same room as the large screen device can establish the home theater. If the speaker meets the condition for establishing a home theater, it is determined that the large screen device and the speaker that is in the same room as the large screen device can establish a home theater; or if the speaker does not meet the condition for establishing a home theater, it is determined that the large screen device and the speaker that is in the same room as the large screen device cannot establish a home theater.

Optionally, the condition for establishing a home theater includes but is not limited to one or more of the following conditions: The speakers indicated by the information about the same-chamber speaker include both a left-placed speaker and a right-placed speaker, the speakers indicated by the information about the same-chamber speaker include both a left surround speaker and a right surround speaker, and the speaker indicated by the information about the same-chamber speaker include a center-channel speaker, or the speaker indicated by the information about the same-chamber speaker includes a subwoofer speaker. If the large screen device determines that the speaker in the same room as the large screen device meets at least one of the conditions for establishing a home theater, the large screen device determines that the large screen device and the speaker that is in the same room as the large screen device can establish a home theater.

It should be noted that a condition for establishing a home theater is not limited in this application. The condition for establishing a home theater may be adjusted based on a type of the speaker, for example, may further include an establishment condition corresponding to a speaker type applicable to the future.

For example, if the speaker in the same room as the large screen device includes only one of the left-placed speaker, the right-placed speaker, the left surround speaker, or the right surround speaker, the condition for establishing a home theater is not met. If the speakers in the same room as the large screen device include both the left-placed speaker and the right-placed speaker, the condition for establishing a home theater is met. If the speakers in the same room as the large screen device include both the left surround speaker and the right surround speaker, the condition for establishing a home theater is met. If the speaker in the same room as the large screen device includes the center-channel speaker, the condition for establishing a home theater is met. If the speaker in the same room as the large screen device includes the subwoofer speaker, the condition for establishing a home theater is met.

For example, it is assumed that speakers indicated by the information about the same-chamber speaker include the speaker a and the speaker b. If the speaker a can be used as a left-placed speaker and a left surround speaker, and the speaker b can be used as a right surround speaker, the condition for establishing a home theater is met (the speaker a is used as a left surround speaker). Alternatively, if the speaker a can be used as a left-placed speaker and a left surround speaker, and the speaker b can be used as a left surround speaker, the condition for establishing a home theater is not met. Alternatively, if the speaker a can be used as a left-placed speaker and a left surround speaker, and the speaker b can be used as a center-channel speaker, the condition for establishing a home theater is met (the speaker a may not be used when a home theater is established, and the speaker b and a large screen device are used to establish a home theater). Alternatively, if the speaker a can be used as a subwoofer speaker, and the speaker b can be used as a subwoofer speaker, the condition for establishing a home theater is met (one of the speaker a and the speaker b may be used when a home theater is established). Alternatively, if the speaker a can be used as a center-channel speaker, and the speaker b can be used as a center-channel speaker, the condition for establishing a home theater is met (one of the speaker a and the speaker b may be used when a home theater is established). Examples are not listed one by one in this application.

In some embodiments, if the large screen device determines that the large screen device and the speaker that is in the same room as the large screen device can establish a home theater, the following S409 is performed, and the large screen device establishes a home theater. If the large screen device determines that the large screen device and the speaker that is in the same room as the large screen device cannot establish a home theater, the large screen device continues to monitor a broadcast message from the speaker. For a specific implementation, refer to S401, or the large screen device ends establishment of a home theater.

In some other embodiments, if the large screen device determines that the large screen device and the speaker that is in the same room as the large screen device can establish a home theater, the large screen device displays a second establishment decision interface. If the large screen device determines that the large screen device and the speaker that is in the same room as the large screen device cannot establish a home theater, the large screen device continues to monitor the broadcast message from the speaker, or ends establishment of the home theater.

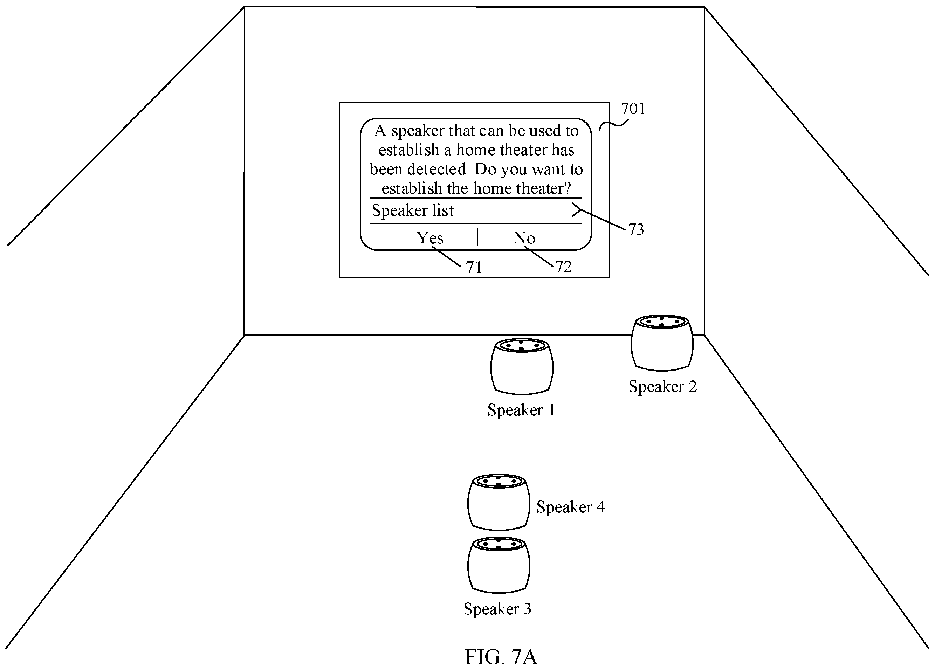

For example, with reference to FIG. 7A, if a large screen device determines that a speaker 1 to a speaker 4 can establish a home theater with the large screen device, the large screen device displays a second establishment decision interface 701 shown in FIG. 7A. The user may determine, by selecting (for example, selecting through a remote control device) or tapping (a display of the large screen device is a touchscreen) a "Yes" control 71 or a "No" control 72 in the second establishment decision interface 701, whether to continue to establish a home theater.

Optionally, the large screen device may further display a list of speakers that can establish a home theater.

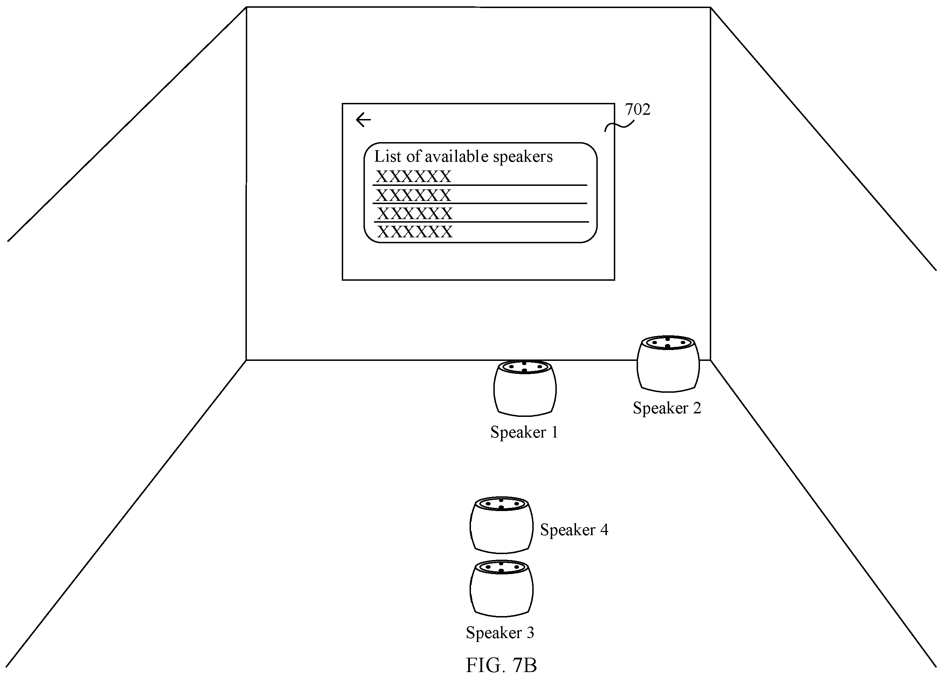

With reference to FIG. 7A, the second establishment decision interface 701 displayed by the large screen device includes a speaker list control 73. After the large screen device detects an operation of selecting the speaker list control 73 by the user, the large screen device displays an interface 702 shown in FIG. 7B. The user may view, in the interface 702, the list of speakers (the speaker list for short) that can establish a home theater and that are detected by the large screen device. The user may determine, based on the list of speakers, whether to establish a home theater.

FIG. 7A and FIG. 7B are merely examples, and shall not constitute any limitation on embodiments of this application.

S409: The large screen device and the speaker complete establishment of the home theater.

In some embodiments, if the large screen device determines that the large screen device and the speaker that is in the same room as the large screen device can establish a home theater, the large screen device starts to establish a home theater.

In some other embodiments, after the large screen device determines that the large screen device and the speaker that is in the same room as the large screen device can establish a home theater, the large screen device and the speaker complete establishment of the home theater based on an operation of determining, by the user, to establish a home theater. With reference to FIG. 7A, after the large screen device detects an operation that the user selects the "Yes" control 71 in the second establishment decision interface 701, the large screen device starts to establish a home theater. If the large screen device detects an operation of selecting the "No" control 72 in the second establishment decision interface 701 by the user, the large screen device ends establishment of the home theater.

Based on the method shown in FIG. 4, compared with the conventional technology in which a user binds the large screen device to the speaker through an application, to ensure that the speaker for establishing a home theater is a speaker at the home of the user, and consequently time consumption is complex. In this application, the large screen device is based on an ultrasound technology and a short-range communication technology, automatic speaker detection in a same room can reduce a quantity of manual operations of the user, thereby improving user experience. In addition, in this application, the large screen device determines whether a speaker in a same room as the large screen device can establish a home theater. Compared with an existing solution in which the user needs to view an instruction manual for establishing a home theater, an instruction manual of the speaker, and the like, this solution greatly reduces difficulty in establishing a home theater, and achieves better user experience effect.

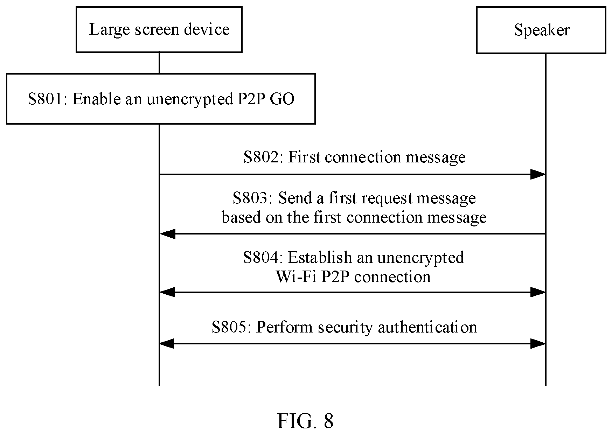

FIG. 8 is a schematic flowchart of another method for establishing a home theater according to an embodiment of this application. In FIG. 8, establishment of a temporary Wi-Fi P2P connection between the large screen device and the speaker is described. The method shown in FIG. 4 and the method shown in FIG. 8 may be separately used, or may be used in combination.

When the method shown in FIG. 4 and the method shown in FIG. 8 are used in combination, when a corresponding function in the method shown in FIG. 4 is performed, no communication connection is established between the large screen device and the speaker. After the large screen device determines that the speaker in the same room as the large screen device can establish a home theater (S408), the following steps are performed, the temporary Wi-Fi P2P connection to the speaker is established by using the method shown in FIG. 8. The speaker in FIG. 8 may be the speaker that is determined by the large screen device in S407 and that is in the same room as the large screen device. Certainly, the large screen device may alternatively establish another short-range communication connection to the speaker, for example, a UWB connection or a Bluetooth connection. For a corresponding specific implementation, refer to explanations and descriptions in a conventional technology. Details are not described in this embodiment of this application.

As shown in FIG. 8, the method includes the following steps.

S801: The large screen device enables an unencrypted P2P group server (group owner, GO).

For example, the unencrypted P2P GO means that another device can establish a Wi-Fi P2P connection to the large screen device without a key. The temporary Wi-Fi P2P connection can be quickly established.

For example, Wi-Fi P2P (also referred to as Wi-Fi direct (Wi-Fi-direct)) is a technology that is based on a Wi-Fi technology and that can directly connect devices, so that a user can perform one-to-one or one-to-many communication without using a local area network or an access point AP. This technology is applicable to many scenarios. As long as the device supports the Wi-Fi P2P protocol, file transfer, screen sharing (Miracast), and even online game playing can be implemented.

A P2P device, a P2P GO, and a P2P group client (group client, GC) are defined in a Wi-Fi P2P architecture. The P2P device is a device that supports a Wi-Fi P2P protocol. The P2P device is an entity of two roles: the P2P GO and the P2P GC. A device that does not become the P2P GO or the P2P GC is a "P2P device." The P2P GO may be referred to as a GO for short, is a role in the Wi-Fi P2P protocol, and is equivalent to an AP. One group has only one P2P GO. The P2P GC may be referred to as a GC for short, and is another role in the Wi-Fi P2P protocol. One group may have a plurality of P2P GCs. For example, in a system including a large screen device and at least one speaker, only one device may serve as the P2P GO role, and another device serves as the P2P GC role.

For example, the P2P GO serves as a manager for communication between devices, may serve as an access point AP for access of the P2P GC, and may further determine a channel used for communication between devices (for example, a channel currently used by the P2P GO). The P2P GC serves as a managed device for communication between devices, uses the P2P GO as an access point (AP), and connects to a device that functions as the P2P GO. After the connection is successful, the devices can directly communicate with each other. Optionally, after the P2P GO determines the channel used for communication between devices, the P2P GO sends information about the channel to the P2P GC, and the P2P GC and the P2P GO may communicate with each other through the channel. When the P2P GO does not determine the channel used for the communication between the devices, the P2P GC may perform full channel scanning on an operating frequency band supported by the P2P GC, to determine the channel used for the communication between the P2P GC and the P2P GO.

In some embodiments, the large screen device and at least one speaker negotiate with each other to determine that the large screen device is used as the P2P GO and the speaker is used as the P2P GC. Alternatively, the large screen device and at least one speaker may not perform P2P GO negotiation, and the large screen device may be directly used as the P2P GO.

In some embodiments, if the large screen device determines that the large screen device and the speaker that is in the same room as the large screen device can establish a home theater, the large screen device enables the unencrypted P2P GO. Alternatively, after the large screen device determines that the large screen device and the speaker that is in the same room as the large screen device can establish a home theater, the large screen device enables the unencrypted P2P GO based on an operation of determining, by the user, to establish a home theater.

For example, when the method shown in FIG. 4 is used in combination with the method shown in FIG. 8, after the large screen device determines that the condition for establishing a home theater is met, or after the large screen device determines that the condition for establishing a home theater is met and the user confirms establishment, the unencrypted P2P GO is enabled.

S802: The large screen device broadcasts a first connection message.

For example, the first connection message indicates to establish an unencrypted Wi-Fi P2P connection to the large screen device.

For example, the first connection message includes a GO name, and may further include channel indication information. The GO name is a name of an access point, and the channel indication information indicates a channel used for communication. For example, the channel indication information includes a channel identifier.

For example, the first connection message may be broadcast by the large screen device by using a wireless communication technology such as a WLAN, a Wi-Fi P2P, a UWB, or Bluetooth.

S803: The speaker sends a first request message based on the first connection message.

For example, the first request message is used to request to establish an unencrypted Wi-Fi P2P connection to the large screen device.

For example, after the speaker receives the first connection message, the speaker sends, based on the GO name, the first request message to the large screen device that enables the P2P GO (or the P2P GO role).

Optionally, the speaker sends, on a channel indicated by the channel indication information, the first request message to the large screen device that enables the P2P GO.

For example, the first request message may be broadcast by the speaker by using the wireless communication technology such as the WLAN, the Wi-Fi P2P, the UWB, or Bluetooth.

S804: The large screen device establishes the unencrypted Wi-Fi P2P connection to the speaker.

For example, after the large screen device receives the first request message, the large screen device establishes the unencrypted Wi-Fi P2P connection to the speaker based on the first request message; or if the large screen device fails to receive the first request message, the large screen device does not establish the unencrypted Wi-Fi P2P connection.

Optionally, the large screen device establishes the unencrypted Wi-Fi P2P connection to the speaker based on the first request message and information about a same-chamber speaker.

For example, the information about the same-chamber speaker indicates a speaker in a same room as the large screen device. If the speaker that sends the first request message is any one of the speakers indicated by the information about the same-chamber speaker, the large screen device establishes the Wi-Fi P2P connection to the speaker; or if the speaker that sends the first request message is not any one of the speakers indicated by the information about the same-chamber speaker the large screen device does not establish the unencrypted Wi-Fi P2P connection.

There is at least one speaker in a same room as the large screen device. When there are a plurality of speakers in a same room as the large screen device, the plurality of speakers may send the first request message to the large screen device after the plurality of speakers each receive the first connection message, and the large screen device may establish unencrypted Wi-Fi P2P connections to the plurality of speakers.

S805: The large screen device and the speaker perform security authentication.

In an example, the large screen device and the speaker are connected through the unencrypted Wi-Fi P2P, and perform security authentication. This improves security.

For example, when there are a plurality of speakers in a same room as the large screen device, the large screen device and the plurality of speakers may be connected through the unencrypted Wi-Fi P2P, and perform security authentication. This improves authentication efficiency.

For a method for performing security authentication by the large screen device and the speaker, refer to a security authentication method in a conventional technology. Details are not described in this embodiment of this application.

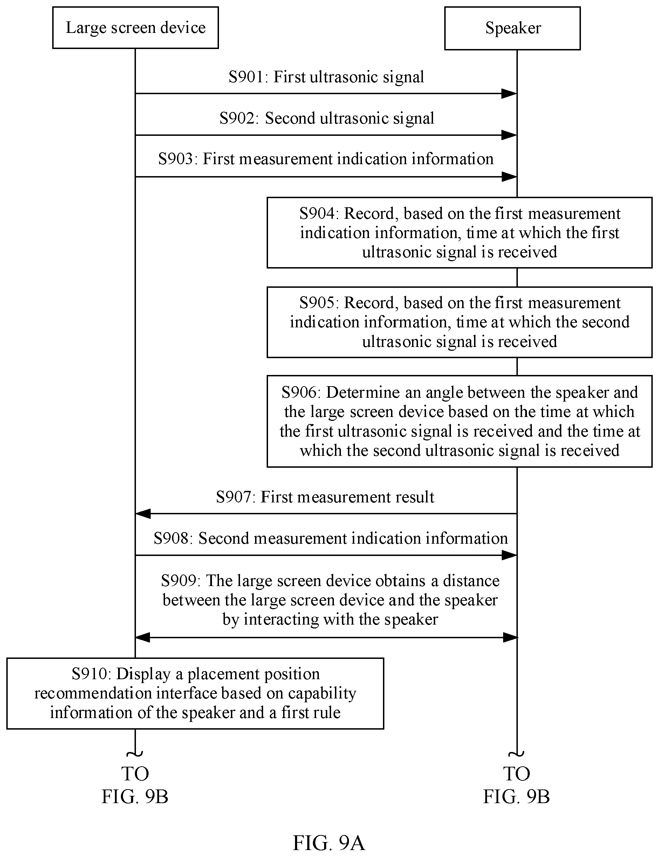

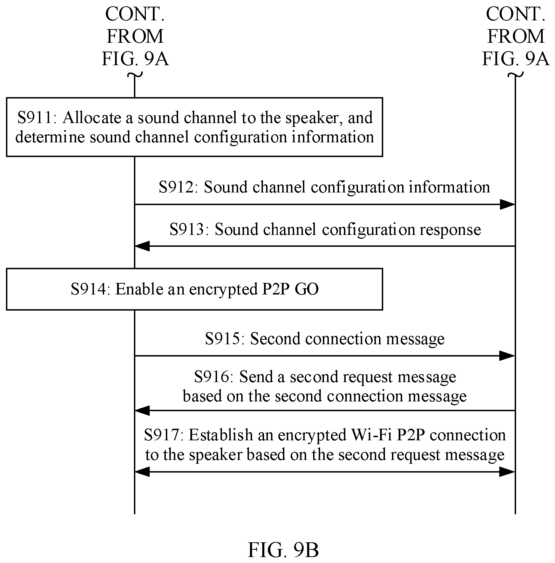

For example, FIG. 9A and FIG. 9B are a schematic flowchart of still another method for establishing a home theater according to an embodiment of this application. FIG. 9A and FIG. 9B describe a case in which a large screen device recommends a placement position of a speaker to a user and allocates a sound channel to the speaker. The method shown in FIG. 4, the method shown in FIG. 8, and/or the method shown in FIG. 9A and FIG. 9B may be used separately, or may be used in combination. When used in combination, after the large screen device determines that a home theater can be established (S408) (or after establishing a short-range communication connection to the speaker (FIG. 8)), the large screen device performs the method shown in FIG. 9A and FIG. 9B. The speaker in the method shown in FIG. 9A and FIG. 9B may be a speaker that is determined by the large screen device and that is in a same room as the large screen device.

As shown in FIG. 9A and FIG. 9B, the method includes the following steps.

S901: A large screen device broadcasts a first ultrasonic signal.

S902: The large screen device broadcasts a second ultrasonic signal.

For example, the first ultrasonic signal and the second ultrasonic signal may be respectively sent by two loudspeakers of the large screen device. For example, a left loudspeaker (a loudspeaker disposed on a left side of the large screen device) and a right loudspeaker of the large screen device respectively send the first ultrasonic signal and the second ultrasonic signal.

Optionally, the large screen device may periodically broadcast the first ultrasonic signal and the second ultrasonic signal, so that all speakers in a same room as the large screen device can receive the first ultrasonic signal and the second ultrasonic signal.

In some embodiments, the large screen device may send the first ultrasonic signal and the second ultrasonic signal in a time division manner or a frequency division manner. In this way, it can be ensured that the first ultrasonic signal and the second ultrasonic signal that are received by the speaker are sent by different loudspeakers of the large screen device, to determine an angle between a speaker and the large screen device.

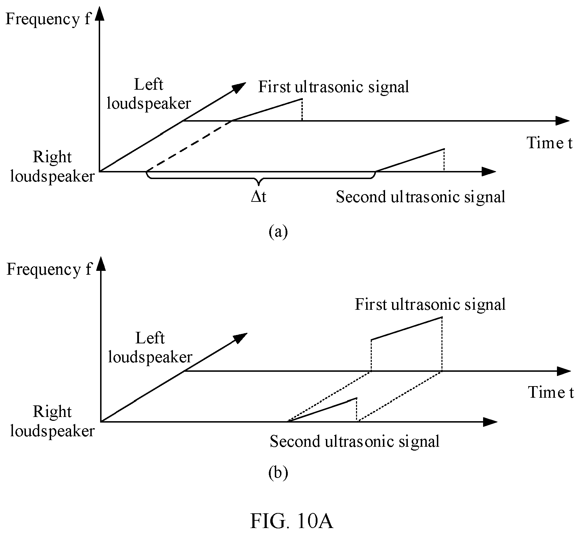

As shown in (a) in FIG. 10A, the time division manner is used as an example. The left loudspeaker of the large screen device first sends the first ultrasonic signal, and after a period of time $\Delta t$, the right loudspeaker of the large screen device sends the second ultrasonic signal. The first ultrasonic signal and the second ultrasonic signal each occupy a same frequency band range. If the large screen device periodically sends the first ultrasonic signal and the second ultrasonic signal, a periodicity of the first ultrasonic signal is greater than $\Delta t$, and a periodicity of the second ultrasonic signal is greater than $\Delta t$. In this way, it can be ensured that two adjacent ultrasonic signals received by the speaker are sent by different loudspeakers of the large screen device.

As shown in (b) in FIG. 10A, the frequency division manner is used as an example. The left loudspeaker and the right loudspeaker of the large screen device respectively send the first ultrasonic signal and the second ultrasonic signal at same time through different frequency band ranges. After receiving ultrasonic signals, the speaker obtains the first ultrasonic signal and the second ultrasonic signal in a filtering manner.

For example, the first ultrasonic signal and the second ultrasonic signal may be but are not limited to frequency modulated continuous wave (frequency modulated continuous wave, FMCW) signals.

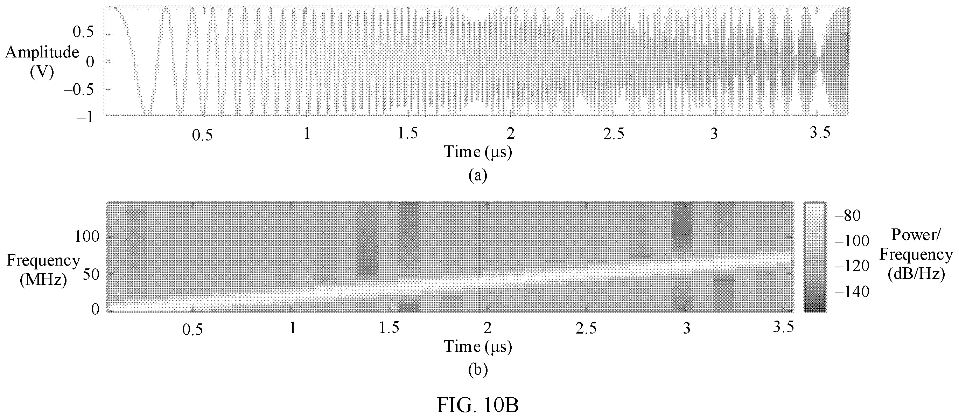

(a) in FIG. 10B shows a waveform of the FMCW signal, and (b) in FIG. 10B shows a spectrum of the FMCW signal.

With reference to (a) in FIG. 10B, from a perspective of time domain, a signal periodicity of the waveform of the frequency modulated continuous wave changes with time. With reference to (b) in FIG. 10B, from a perspective of frequency domain, a frequency of the frequency modulated continuous wave changes linearly with time. Because a frequency of the frequency modulated continuous wave keeps changing with time, it is easy to determine a direct signal based on a start frequency, and impact of a reflection path on measurement is weakened. Therefore, the FMCW signal is applicable to an indoor closed environment, a complex multipath environment, and the like, and measurement accuracy can be improved.

In an implementation, the large screen device may separately send the first ultrasonic signal and the second ultrasonic signal by using the ultrasonic transceiver module 301a.

S903: The large screen device sends first measurement indication information to the speaker.

For example, the first measurement indication information indicates the speaker to measure an angle between the large screen device and the speaker, or the first measurement indication information indicates the speaker to receive an ultrasonic signal.

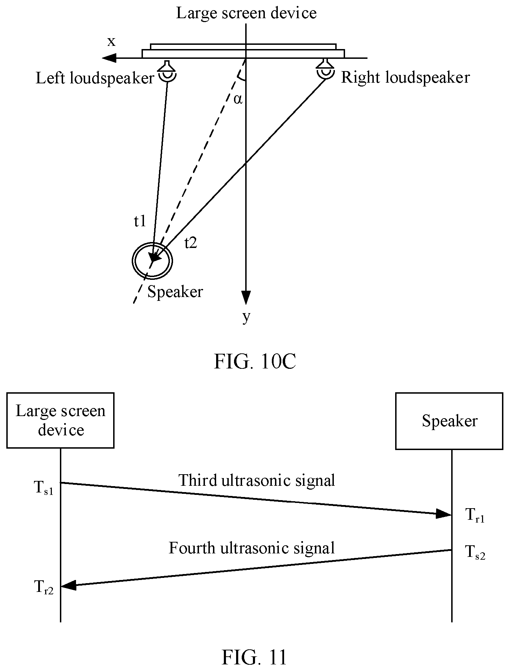

For example, the angle between the large screen device and the speaker may be an angle of the speaker relative to the large screen device, for example, an angle between a connection line between the speaker and the large screen device and a reference line. The reference line may be a y axis shown in FIG. 10C.

Optionally, the large screen device sends the first measurement indication information to each speaker in speakers in a same room as the large screen device, to indicate the speaker in the same room as the large screen device to start to measure the angle between the large screen device and the speaker.

For example, the large screen device sends the first measurement indication information to the speaker through a short-range communication connection (for example, an unencrypted Wi-Fi P2P connection, a UWB connection, or a Bluetooth connection).

An execution sequence of S903 and S901 is not limited in this application. The large screen device may send the first measurement indication information before or after sending the first ultrasonic signal and the second ultrasonic signal.

S904: The speaker records, based on the first measurement indication information, time at which the first ultrasonic signal is received.

S905: The speaker records, based on the first measurement indication information, time at which the second ultrasonic signal is received.

For example, the speaker receives the first measurement indication information, and starts to measure the angle between the large screen device and the speaker based on an indication of the first measurement indication information. For example, the speaker receives the first ultrasonic signal, and records time t1 at which the first ultrasonic signal is received; and the speaker receives the second ultrasonic signal, and records time t2 at which the second ultrasonic signal is received.

For example, the speaker receives the first ultrasonic signal and the second ultrasonic signal by using the microphone.

In an implementation, the speaker may separately receive the first ultrasonic signal and the second ultrasonic signal by using the ultrasonic transceiver module 304b.

S906: The speaker determines the angle between the speaker and the large screen device based on time at which the first ultrasonic signal is received and time at which the second ultrasonic signal is received.

For example, the speaker calculates a time difference of arrival based on the time at which the first ultrasonic signal is received and the time at which the second ultrasonic signal is received, and calculates the angle of the speaker relative to the large screen based on the time difference of arrival.

As shown in FIG. 10C, the left loudspeaker of the large screen device sends the first ultrasonic signal, and the speaker receives the first ultrasonic signal, and records time t1 at which the first ultrasonic signal is received. The right loudspeaker of the large screen device sends the second ultrasonic signal, and the speaker receives the second ultrasonic signal, and records time t2 at which the second ultrasonic signal is received.

With reference to FIG. 10C and (a) in FIG. 10A, if the first ultrasonic signal and the second ultrasonic signal are sent in the time division manner, a time difference of arrival is t2-t1-Δt, and the speaker calculates an angle α of the speaker relative to the large screen based on the time difference of arrival t2-t1-Δt.

With reference to FIG. 10C and (b) in FIG. 10A, if the first ultrasonic signal and the second ultrasonic signal are sent in the frequency division manner, the speaker obtains the first ultrasonic signal and the second ultrasonic signal in the filtering manner. In addition, the speaker records the time t1 at which the first ultrasonic signal is received and the time t2 at which the second ultrasonic signal is received, a time difference of arrival is t2-t1, and the speaker calculates the angle $\alpha$ of the speaker relative to the large screen based on the time difference of arrival t2-t1.

Optionally, the speaker may determine the angle between the speaker and the large screen device based on the time difference of arrival, a transmission rate of an ultrasonic signal in a medium, and a distance between the two loudspeakers. The transmission rate of the ultrasonic signal in the medium is usually selected as a speed of light.

For example, a manner in which the speaker obtains the angle between the speaker and the large screen device is not limited thereto, provided that the angle between the speaker and the large screen device can be determined by using an ultrasonic technology.

In an implementation, the speaker may determine the angle between the speaker and the large screen device by using the ultrasonic processing module 303b.

Alternatively, the angle between the speaker (the speaker sends the time difference of arrival to the large screen device) and the large screen device may be determined based on the time difference of arrival of the large screen device.

In some embodiments, the angle between the speakers may be obtained by sending an ultrasonic signal between the speakers. A specific implementation is similar to that of determining the angle between the speaker and the large screen device. Details are not described in this application. Optionally, after the speaker obtains the angle between the speakers, the speaker may send the obtained angle to the large screen device, so that the large screen device recommends a placement position.

It should be noted that a manner of determining the angle between the speaker and the large screen device (or determining the angle between the speaker and the large screen device) is not limited in this application, and the angle between the speaker and the large screen device may be determined by using an ultrasonic technology. Alternatively, the angle between the speaker and the large screen device may be measured by using a UWB technology, a millimeter wave technology, a Wi-Fi positioning technology, or a Bluetooth positioning technology. Details are not described.

S907: The speaker sends a first measurement result to the large screen device.

For example, the first measurement result includes the angle between the speaker and the large screen device.

For example, the angle between the speaker and the large screen device is determined by the speaker (S906), and the speaker sends the angle between the speaker and the large screen device to the large screen device.

Alternatively, for example, the first measurement result includes the time difference of arrival between the first ultrasonic signal and the second ultrasonic signal, or the first measurement result includes time of arrival of the first ultrasonic signal and time of arrival of the second ultrasonic signal.

For example, the angle between the speaker and the large screen device is determined by the large screen device, the speaker sends, to the large screen device, information (the time difference of arrival between the first ultrasonic signal and the second ultrasonic signal, or the time of arrival of the first ultrasonic signal and the time of arrival of the second ultrasonic signal) used to measure the angle between the speaker and the large screen device, and the large screen device measures the angle between the speaker and the large screen device. For a specific implementation, refer to S906. Details are not described herein again.

**In** an implementation, the large screen device may determine the angle between the speaker and the large screen device by using the ultrasonic processing module 303a.

Optionally, each speaker in a same room as the large screen device sends the first measurement result to the large screen device (S904 to S907 are performed). After obtaining first measurement results corresponding to all the speakers, the large screen device stops periodically broadcasting the first ultrasonic signal and the second ultrasonic signal.

For example, the speaker sends the first measurement result to the large screen device through the short-range communication connection.

S908: The large screen device sends second measurement indication information to the speaker.

For example, the second measurement indication information indicates the speaker to measure a distance between the large screen device and the speaker.

Optionally, the large screen device sends the second measurement indication information to each speaker in speakers in a same room as the large screen device, to indicate the speaker in the same room as the large screen device to start to measure the distance between the large screen device and the speaker, or start a ranging procedure. After receiving an ultrasonic signal, the speaker starts the ranging procedure.

For example, the large screen device sends the second measurement indication information to the speaker through a short-range communication connection.

It should be noted that a sequence of measuring the angle between the speaker and the large screen device and measuring the distance between the speaker and the large screen device is not limited in this application, and distance measurement may be performed before or after the angle measurement.

S909: The large screen device obtains the distance between the large screen device and the speaker by interacting with the speaker.

For example, the distance L between the large screen device and the speaker may be obtained in the following manner: The large screen device may measure the distance L between the large screen device and the speaker according to a two-way ranging method. The two-way ranging method includes single-sided two-way ranging (single-sided two-way ranging, SS-TWR) and double-sided two-way ranging (double-sided two-way ranging, DS-TWR). Compared with the SS-TWR method, the DS-TWR method increases response time, but reduces a ranging error.

With reference to FIG. 11, the following uses the SS-TWR as an example to describe how to obtain the distance between the large screen device and the speaker.

As shown in FIG. 11, the large screen device sends a third ultrasonic signal, and records a moment Ts1 at which the third ultrasonic signal is sent. The speaker receives the third ultrasonic signal, and records a moment Tr1 at which the third ultrasonic signal arrives at the speaker. After receiving the third ultrasonic signal, the speaker sends a fourth ultrasonic signal, and records a moment Ts2 at which the fourth ultrasonic signal is sent. The large screen device receives the fourth ultrasonic signal, and records a moment Tr2 at which the fourth ultrasonic signal arrives at the large screen device.

Therefore, the transmission time t of the ultrasonic signal between the two devices may be calculated according to the following formula (1), and the distance L between the large screen device and the speaker may be calculated according to the formula (2).

$$t = \frac{(T_{r1} + T_{r2}) - (T_{s1} + T_{s2})}{2} \quad (1)$$

$$L = c \times t \quad (2)$$

In the foregoing formula (2), c is a transmission rate of the ultrasonic signal in a medium. c is generally a light speed through selection.

The transmission time t calculated according to the foregoing formula (1) eliminates an error between a clock of the speaker and a clock of the large screen device (referred to as a clock error below). With reference to FIG. 11, it is assumed that a clock error is N, and the clock of the speaker is N faster than the clock of the large screen device, $T_{s1}+N+t=T_{r1}$, and $T_{s2}-N+t=T_{r2}$, the formula (1) is obtained based on $T_{s1}+N+t=T_{r1}$ and $T_{s2}-N+t=T_{r2}$, so that the error between the clock of the speaker and the clock of the large screen device can be eliminated, and more accurate transmission time can be obtained.

Optionally, the third ultrasonic signal may also be sent by the speaker. Correspondingly, the fourth ultrasonic signal may also be sent by the large screen device. Correspondingly, a fifth ultrasonic signal may also be sent by the speaker. The large screen device or the speaker may calculate L according to the formula (1) and the formula (2).

It should be noted that the distance L between the large screen device and the speaker may alternatively be obtained through calculation in another manner, and is not limited to the manner listed above.

Optionally, the large screen device or the speaker may play an ultrasonic signal (for example, the third ultrasonic signal, the fourth ultrasonic signal, or the fifth ultrasonic signal) by using a respective loudspeaker (for example, any loudspeaker of the large screen device or the speaker). The ultrasonic signal may be an FMCW signal. The large screen device or the speaker receives the ultrasonic signal by using a microphone (for example, any microphone of the large screen device or the speaker).

In some embodiments, the large screen device or the speaker may record, by using a timer or in a recording manner, a moment at which the ultrasonic signal is received and sent.

For example, with reference to FIG. 2, after the processor 210 (for example, a system on chip (system on chip, SOC)) of the large screen device starts a ranging procedure, the processor 210 (for example, a DSP) of the large screen device starts the timer and controls the loudspeaker 260A to play the ultrasonic signal (for example, the third ultrasonic signal), and continues to monitor a case in which the microphone 260C receives the ultrasonic signal (for example, the fourth ultrasonic signal). The processor 210 (for example, the DSP) of the speaker starts the timer based on the second measurement indication information, continuously monitors a case in which the microphone 260C receives ultrasonic signals (for example, the third ultrasonic signal and the fifth ultrasonic signal), and controls the loudspeaker 260A to play the ultrasonic signal (for example, the fourth ultrasonic signal). The large screen device obtains, through a count value of the timer, a period of time Tro1 from sending the third ultrasonic signal to receiving the fourth ultrasonic signal and a period of time Tre2 from receiving the fourth ultrasonic signal to sending the fifth ultrasonic signal. The speaker obtains, through the count value of the timer, a period of time Tre1 from receiving the fourth ultrasonic signal to sending the third ultrasonic signal and a period of time Tro1 from sending the fourth ultrasonic signal to receiving the fifth ultrasonic signal.

Optionally, for the timer manner, the processor 210 needs to control the loudspeaker 260A to play the ultrasonic signal with a small delay, so that the loudspeaker 260A receives, as soon as possible, information indicating the loudspeaker 260A to play the ultrasonic signal. In this way, the count value of the timer is more accurate, and ranging precision is higher.

For another example, with reference to FIG. 2, after the processor 210 of the large screen device starts the ranging procedure, the processor 210 of the large screen device starts recording, controls the loudspeaker 260A to play an ultrasonic signal, and then continuously monitors the ultrasonic signal received by the microphone 260C. Similarly, the processor 210 of the speaker starts recording based on the second measurement indication information, continuously monitors a case in which the microphone 260C receives the ultrasonic signal, and controls the loudspeaker 260A to play the ultrasonic signal. Recording information obtained by the large screen device through recording includes an ultrasonic signal sent by the large screen device and a received ultrasonic signal. The large screen device processes the recording information, and may detect Tro1 and Tre2. Similarly, the speaker processes recording information obtained by the speaker, and may detect Tre1 and Tro1.

For example, the large screen device may send Tro1 and Tre2 to the speaker, and the speaker obtains the distance between the large screen device and the speaker based on Tro1, Tre2, Tre1, and Tro1. Alternatively, the speaker may send Tre1 and Tro1 to the large screen device, and the large screen device obtains the distance between the large screen device and the speaker based on Tro1, Tre2, Tre1, and Tro1.

S909 is performed between the large screen device and the speaker that is in a same room as the large screen device, to measure and obtain a distance between each speaker and the large screen device.

In some embodiments, a distance between the speakers may be obtained according to a two-way ranging method. A specific implementation is similar to the foregoing implementation of determining the distance between the speaker and the large screen device. Details are not described in this application. Optionally, after the speaker obtains the distance between the speakers, the speaker may send the obtained distance to the large screen device, so that the large screen device recommends a placement position.

It should be noted that a ranging manner is not limited in this application. An ultrasonic technology may be used for ranging, or a UWB technology, a millimeter wave technology, a Wi-Fi positioning technology, or a Bluetooth positioning technology may be used to implement distance measurement.

S910: The large screen device displays a placement position recommendation interface based on capability information of the speaker and a first rule.

For example, the first rule (also referred to as a preset condition) includes placement positions of speakers that support different sound channels during establishment of a home theater. For example, the first rule includes but is not limited to one or more of the following: a distance between the left-placed speaker and the large screen device, and a distance between the right-placed speaker and the large screen device each range from 0 meters to 2 meters; an angle between the left-placed speaker and the large screen device, and an angle between the right-placed speaker and the large screen device each range from -10 degrees to 15 degrees; positions of the left-placed speaker and the right-placed speaker are basically symmetrical with respect to the large screen device; a distance between the left surround speaker and the left-placed speaker ranges from 2 meters to 7 meters; a distance between the right surround speaker and the right-placed speaker ranges from 2 meters to 7 meters; an angle between the left surround speaker and the large screen device and an angle between the right surround speaker and the large screen device each range from 8 degrees to 63 degrees; a distance between the left surround speaker and the right surround speaker ranges from 2 meters to 8 meters; positions of the left surround speaker and the right surround speaker are basically symmetrical with respect to the large screen device; a placement position of the center-channel speaker is above or behind the large screen device; and a distance between the subwoofer and the wall is greater than 1 m.

It should be noted that the first rule may be preset in the large screen device, or the first rule may be obtained by the large screen device from the server. The server maintains the first rule. When a type of speaker is newly added, a designer may update the first rule in the server, after obtaining an updated first rule, the large screen device determines the placement position of the speaker according to the updated first rule.

For example, specific content of the first rule is not limited in this application, and the foregoing is merely an example provided in this application. For example, the content of the first rule may be adjusted based on a size of a room and a house type.

**In** some embodiments, the large screen device displays the placement position recommendation interface based on the capability information of the at least one speaker (a speaker in a same room as the large screen device) and the first rule. S901 to S909 are optional steps. The placement position recommendation interface indicates a placement position of each of the at least one speaker.

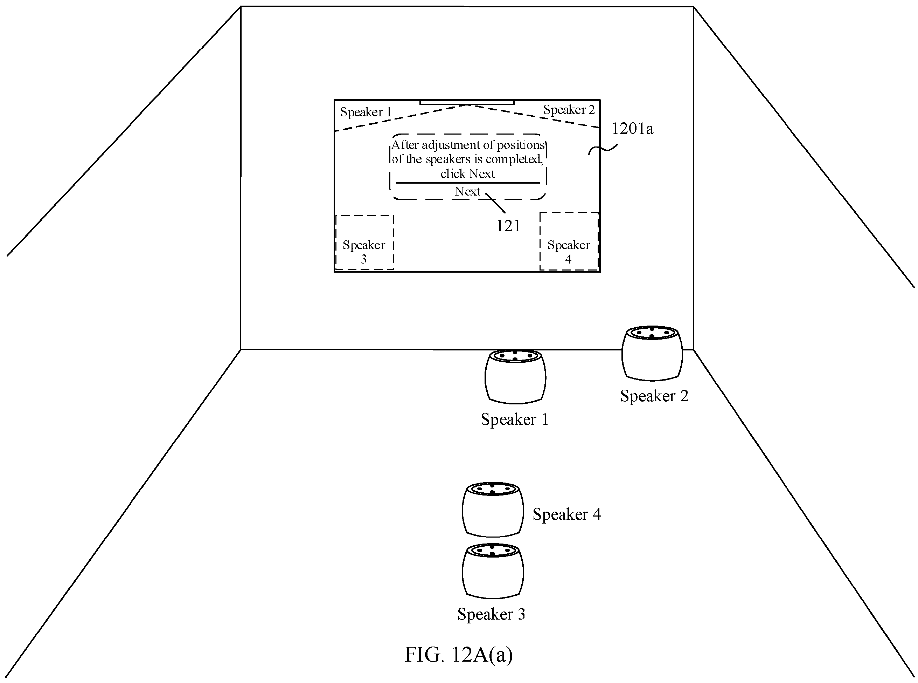

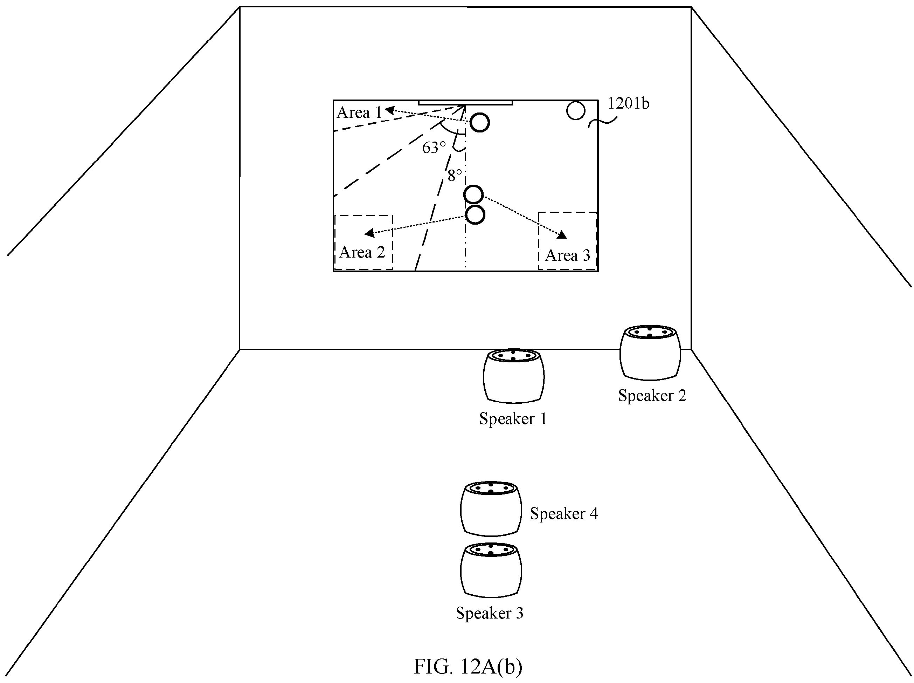

As shown in FIG. 12A(a), the large screen device displays a placement position recommendation interface 1201a based on capability information of a speaker 1 to a speaker 4 and the first rule. It is assumed that capability information of the speaker 1 includes supporting in using as a left-placed speaker and a right-placed speaker, capability information of the speaker 2 includes supporting in using as a right-placed speaker, capability information of the speaker 3 includes supporting in using as a left surround speaker and a right surround speaker, and capability information of the speaker 4 includes supporting in using as a right surround speaker. The large screen device uses the speaker 1 as a left-placed speaker, the speaker 2 as a right-placed speaker, the speaker 3 as a left surround speaker, and the speaker 4 as a right surround speaker based on the capability information of the speaker 1 to the speaker 4. The placement position recommendation interface 1201a is displayed according to the first rule, and the user is prompted to place the speaker 1 to the speaker 4 in a highlighted area (for example, a dashed-line area) in the placement position recommendation interface 1201a.

In some other embodiments, the large screen device may directly comprehensively determine, based on the position information and the capability information of the at least one speaker and the first rule, whether a current position of the speaker is appropriate. If the current position of the speaker needs to be adjusted, the large screen device displays a placement position recommendation interface to prompt the user to perform adjustment (or displays a first interface, where the first interface includes recommendation information of a placement position of at least one speaker); or if the current position of the speaker does not need to be adjusted, the large screen device displays a placement position recommendation interface indicating the placement position succeeds (or displays a second interface, where the second interface includes information indicating that placement succeeds).

Optionally, the position information of the speaker includes an angle between the speaker and the large screen device and a distance between the speaker and the large screen device, and may further include an angle between the speakers and a distance between the speakers.

As shown in FIG. 12A(b), the large screen device displays a placement position recommendation interface 1201b based on position information and the capability information of the speaker 1 to the speaker 4 and the first rule. It is assumed that for the capability information of the speaker 1 to the speaker 4, refer to the foregoing descriptions in FIG. 12A(a). The large screen device uses the speaker 1 as a left-placed speaker, the speaker 2 as a right-placed speaker, the speaker 3 as a left surround speaker, and the speaker 4 as a right surround speaker based on the capability information of the speaker 1 to the speaker 4. Based on the position information of the speaker 1 to the speaker 4 and the first rule, the placement position recommendation interface 1201b is displayed, and the user is prompted to move the speaker 1 to an area 1, move the speaker 3 to an area 2, and move the speaker 4 to an area 3.

Optionally, a speaker that needs to be adjusted is displayed, on the large screen device, distinguishing from a speaker that does not need to be adjusted. For example, as shown in FIG. 12A(b), a placement position of the speaker 2 meets the first criterion and does not need to be adjusted, and placement positions of the speaker 1, the speaker 3, and the speaker 4 do not meet the first criterion and need to be adjusted. If the speaker 2 is displayed in green, it indicates that the placement position does not need to be adjusted. If the speaker 1, the speaker 3, and the speaker 4 are displayed in red, it indicates that the placement positions need to be adjusted.

It should be noted that FIG. 12A(a) and FIG. 12A(b) are merely examples, and more or fewer elements may be displayed in the placement position recommendation interface, for example, the placement position recommendation interface 1201b may not display related images at an angle of 8 degrees and an angle of 63 degrees.

In some embodiments, the large screen device may perform S901 to S909 again to obtain position information of the speaker again. Then, the large screen device comprehensively determines, based on the re-obtained placement position information and the capability information of the speaker and the first rule, whether a current position of the speaker is appropriate. If the current position of the speaker needs to be adjusted, the large screen device displays a placement position recommendation interface to prompt the user to perform adjustment (or displays a third interface, where the third interface includes recommendation information of a placement position of at least one speaker); or if the current position of the speaker does not need to be adjusted, the large screen device displays a placement position recommendation interface indicating that the placement position succeeds (or displays a fourth interface, where the fourth interface includes information indicating that placement succeeds).

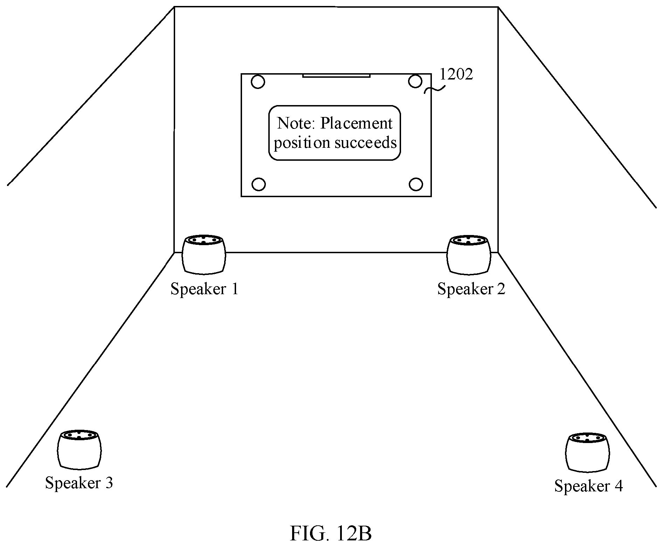

For example, the large screen device performs S901 to S909 again, and comprehensively determines, based on the position information and the capability information of the speaker, and the first rule, whether the current position of the speaker is appropriate. If the current position of the speaker is appropriate, the large screen device displays a placement position recommendation interface 1202 indicating that the placement position succeeds, as shown in FIG. 12B. Optionally, the large screen device displays the speaker 1 to the speaker 4 in green. If the placement position is inappropriate, the user may be prompted again to adjust the placement position of the speaker, and an interface similar to the placement position recommendation interface 1201a or the placement position recommendation interface 1201b is displayed.

For example, after the large screen device detects that the user adjusts the placement position of the speaker, S901 to S909 may be performed again to obtain the position information of the speaker again. For example, the large screen device may obtain, based on the placement completion operation performed by the user on the placement position recommendation interface, the placement position of the speaker that has been adjusted by the user.

For example, the placement position recommendation interface may be further used by the user to determine whether adjustment of the placement position of the speaker is completed. With reference to FIG. 12A(a), after seeing the placement position recommended in the placement position recommendation interface 1201a of the large screen device, the user adjusts the position of the speaker, and after the adjustment is completed, selects a next control 121. After detecting an operation of selecting the next control 121 in the placement position recommendation interface by the user, the large screen device obtains position information of the speaker 1 to the speaker 4 again. FIG. 12A(a) is merely an example. The placement position recommendation interface 1201b shown in FIG. 12A(b) may also display a next control (not shown in FIG. 12A(b)). Details are not described one by one.

Alternatively, for example, after the large screen device displays the placement position recommendation interface for a period of time, S901 to S909 may be performed again to obtain the position information of the speaker again.

For example, the large screen device displays the placement position recommendation interface for a period of time (for example, 40 seconds) by default, and the user has completed adjustment of the placement position of the speaker based on the placement recommendation interface. After the period of time (for example, 40 seconds), the large screen device automatically detects the position information of the speaker again. This can reduce user operations and further improve user experience.

In some embodiments, the large screen device may periodically detect a position (an angle and a distance) of the speaker. If the position of the speaker changes (different from a previous angle and distance), the large screen device determines whether the first rule is met. If the first rule is not met, the user is prompted to adjust the position of the speaker. In this way, after the speaker is moved, the large screen device may prompt, in time, the user to place the speaker at a proper position.

In this way, compared with a manner in which the user determines the placement position and measures the position of the speaker through an instruction manual or a professional provides door-to-door guidance, the large screen device smartly recommends the placement position of the speaker in the home theater, which can help the user easily and quickly complete placement of the speaker in the home theater without a complex manual operation of the user, so that a user operation can be simplified, thereby improving user experience. In addition, after the speaker is accurately placed, optimal effect can be achieved in subsequent sound field calibration. This improves user experience.

S911: The large screen device allocates a sound channel to the speaker, and determines sound channel configuration information.

For example, the sound channel configuration information indicates a sound channel type of the speaker. For example, the sound channel type includes but is not limited to the following: a left sound channel, a right sound channel, left surround, right surround, a middle sound channel, or a subwoofer.

In some embodiments, the large screen device determines the sound channel configuration information based on the placement position of the speaker. For example, the large screen device may allocate the sound channel to the speaker based on a position of the speaker that is adjusted by the user in S910 (the large screen device determines the placement position for the user succeeds). To be specific, the large screen device first determines the placement position of the speaker, and then allocates the sound channel to the speaker. S911 is performed after S910.

Optionally, the large screen device may further determine the sound channel configuration information based on the capability information of the speaker. This can improve accuracy of a placement position and audio channel allocation. In other words, the large screen device may allocate the sound channel to the speaker based on the placement position and the capability information of the speaker.

A sequence in which the large screen device determines the position of the speaker and allocates the sound channel to the speaker is not limited in this application, provided that the placement position of the speaker can be recommended to the user and the sound channel can be allocated to the speaker.

With reference to FIG. 12B, the large screen device allocates a sound channel type of the speaker 1 that is placed on the left side of the user when the user faces the large screen device and that is close to the large screen device as the left sound channel, allocates a sound channel type of the speaker 2 that is placed on the right side of the user when the user faces the large screen device and that is close to the large screen device as the right sound channel, allocates a sound channel type of the speaker 3 that is placed on the left side of the user when the user faces the large screen device and that is away from the large screen device as left surround, and allocates a sound channel type of the speaker 4 that is placed on the right side of the user when the user faces the large screen device and that is away from the large screen device as right surround.

In some embodiments, the large screen device may periodically detect the position of the speaker. If the position of the speaker changes, the large screen device determines whether the sound channel needs to be readjusted, and reallocates a role (a sound channel) to the speaker.

S912: The large screen device sends the sound channel configuration information to the speaker.

Optionally, the large screen device sends the sound channel configuration information to the speaker through a short-range communication connection.

With reference to FIG. 12B, the large screen device sends sound channel configuration information 1 to the speaker 1, where the sound channel configuration information 1 indicates that the sound channel type of the speaker 1 is the left sound channel. The large screen device sends sound channel configuration information 2 to the speaker 2, where the sound channel configuration information 2 indicates that the sound channel type of the speaker 2 is the right sound channel. The large screen device sends sound channel configuration information 3 to the speaker 3, where the sound channel configuration information 3 indicates that the sound channel type of the speaker 3 is left surround. The large screen device sends sound channel configuration information 4 to the speaker 4, where the sound channel configuration information 4 indicates that the sound channel type of the speaker 4 is right surround. The speaker 1 to the speaker 4 respectively receive the sound channel configuration information 1 to the sound channel configuration information 4.

S913: The speaker sends a sound channel configuration response to the large screen device.

For example, the sound channel configuration response indicates that sound channel configuration is completed.

For example, the speaker receives the sound channel configuration information, configures the sound channel based on the sound channel configuration information, and sends the sound channel configuration response to the large screen device after the configuration is completed.

Optionally, the speaker sends the sound channel configuration response to the large screen device through the short-range communication connection.

In this way, the large screen device allocates the sound channel to the speaker. Compared with a manner in which the user configures the sound channel for the speaker through a button, an application, or door-to-door guidance of a professional, this manner can help the user simply and quickly complete sound channel configuration of the speaker without a manual operation of the user, thereby improving user experience.

In some embodiments, after the placement position and the audio channel allocation of the speaker are completed, a communication link, for example, a Wi-Fi P2P connection, for transmitting an audio/a video by the user may be established between the large screen device and the speaker, for example, the following S914 to S917.

S914: The large screen device enables an encrypted P2P GO.

For example, the encrypted GO means that another device needs a password to establish a Wi-Fi P2P connection to the large screen device. This ensures security of Wi-Fi P2P connection.

S915: The large screen device sends a second connection message.

For example, the second connection message indicates the speaker to establish an encrypted Wi-Fi P2P connection to the large screen device.

For example, the second connection message includes a GO name and verification information, and may further include channel indication information.

For example, the verification information is used to perform security verification. For example, the verification information includes a key or a password, and the key may be a pre-shared key (pre-shared key, PSK).

For example, the channel indication information indicates a channel used for communication. For example, the channel indication information may include a channel identifier.

Optionally, the large screen device sends the second connection message to the speaker through the short-range communication connection.

S916: The speaker sends a second request message to the large screen device based on the second connection message.

For example, the second request message is used to request to establish an encrypted Wi-Fi P2P connection to the large screen device.

Optionally, the second request message includes the verification information.

For example, after receiving the second connection message, the speaker sends, based on the GO name, the second request message to the large screen device that enables the P2P GO.

Optionally, the speaker sends, on a channel indicated by the channel indication information, the second request message to the large screen device that enables the P2P GO.

Optionally, the speaker sends the second request message to the large screen device through the short-range communication connection.

S917: The large screen device establishes the encrypted Wi-Fi P2P connection to the speaker based on the second request message.

For example, the large screen device performs verification on the speaker based on the verification information in the second request message, and if the verification succeeds, the large screen device establishes the encrypted Wi-Fi P2P connection to the speaker; or if the verification fails, the Wi-Fi P2P connection fails.

For example, if the second request message includes a PSK, and the large screen device verifies that the PSK in the second request message is the same as the PSK in the second connection message, the large screen device establishes the encrypted Wi-Fi P2P connection to the speaker; or if the verification fails, the Wi-Fi P2P connection fails.

In this way, each speaker in speakers in a same room as the large screen device and the large screen device may perform S914 to S917 to establish a Wi-Fi P2P connection, and establishment of a secure and stable Wi-Fi P2P connection between the large screen device and the speaker is completed, and a networking process between the large screen device and the speaker is completed.

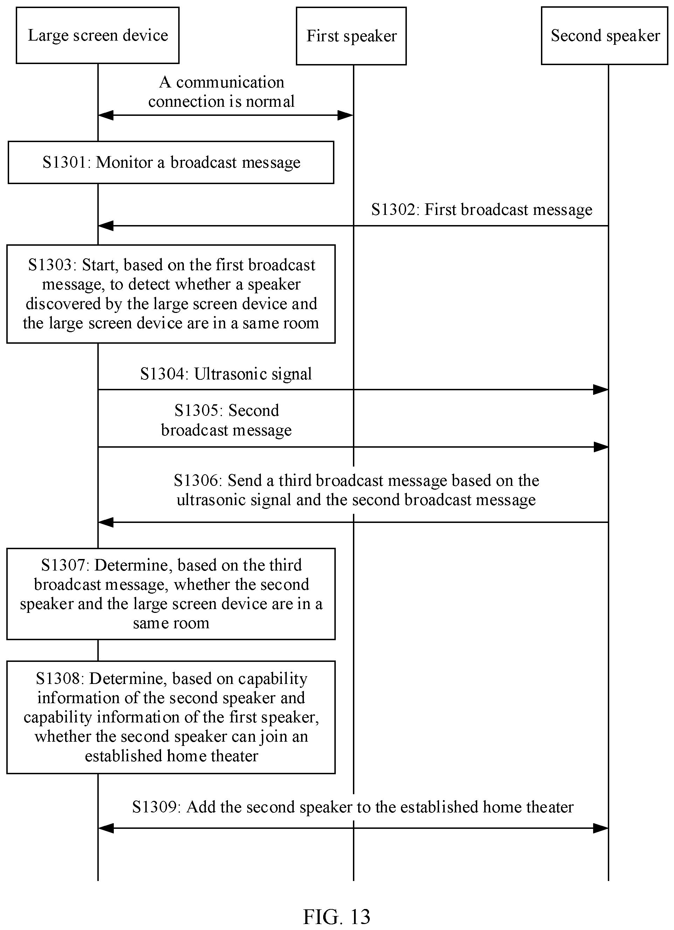

In a possible design, the method shown in FIG. 4, the method shown in FIG. 8, and the method shown in FIG. 9A and FIG. 9B are further applicable to a scenario in which a speaker is newly added to an established home theater. It is assumed that after the first speaker (one or more) and the large screen device perform the corresponding functions in the methods shown in FIG. 4, FIG. 8, and/or FIG. 9A and FIG. 9B, a home theater is successfully established, and then a second speaker is added indoors without a manual operation of the user, and the large screen device and the second speaker automatically perform corresponding functions in the methods shown in FIG. 4, FIG. 8, and/or FIG. 9A and FIG. 9B, so that the second speaker joins the established home theater, or the second speaker is rejected to join the established home theater. For a specific implementation, refer to the following descriptions in FIG. 13.

For example, FIG. 13 is a schematic flowchart of yet another method for establishing a home theater according to an embodiment of this application. The method shown in FIG. 13 is applicable to a scenario in which a speaker is newly added to an established home theater. A communication connection (a Wi-Fi P2P connection) between a first speaker and a large screen device is normal, there may be one or more first speakers, a second speaker is a newly added speaker, and there may be one or more second speakers. After the second speaker is powered on, the second speaker may be added to an established home theater by using the method shown in FIG. 13. As shown in FIG. 13, the method includes the following steps.

S1301: The large screen device monitors a broadcast message.

S1302: The second speaker sends a first broadcast message.

For example, the first broadcast message includes capability information of the second speaker. The capability information of the second speaker may also be referred to as second capability information, and the second capability information indicates a sound channel supported by the second speaker.

S1303: The large screen device starts, based on the first broadcast message, to detect whether a speaker discovered by the large screen device and the large screen device are in a same room.

S1304: The large screen device sends an ultrasonic signal.

S1305: The large screen device sends a second broadcast message.

S1306: The second speaker sends a third broadcast message based on the ultrasonic signal and the second broadcast message.

For specific implementations of S1301 to S1306, refer to S401 to S406. Details are not described herein again.

S1307: The large screen device determines, based on the third broadcast message, whether the second speaker and the large screen device are in a same room.

For a specific implementation of S1307, refer to S407. Details are not described herein again.

S1308: The large screen device determines, based on the capability information of the second speaker and capability information of the first speaker, whether the second speaker can join the established home theater.

For example, the large screen device determines whether the capability information of the second speaker and the capability information of the first speaker meet a condition for establishing a home theater. For a condition for establishing a home theater, refer to the corresponding descriptions in FIG. 4.

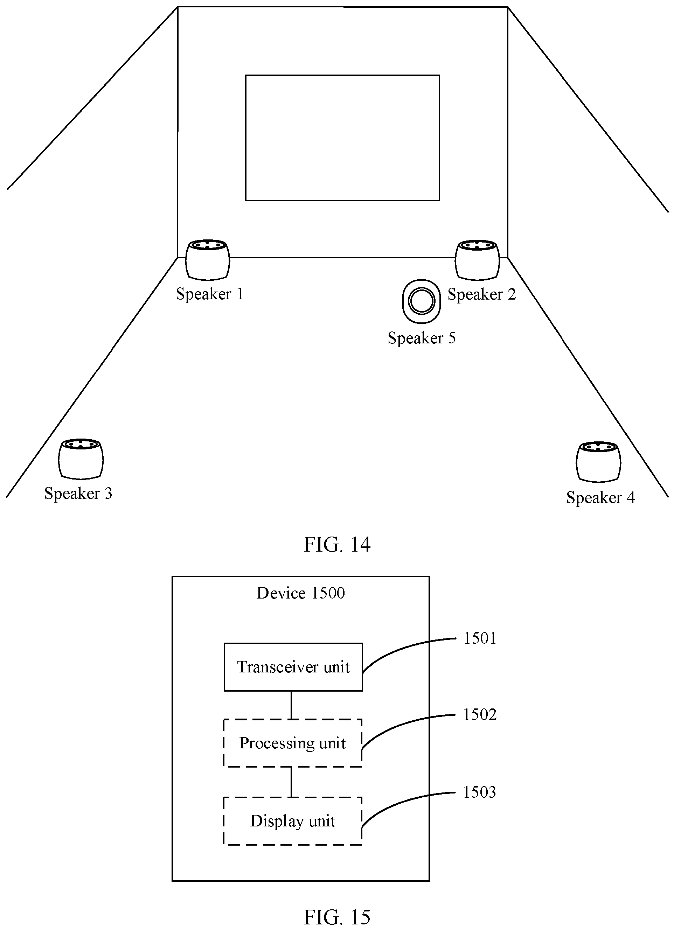

It is assumed that a speaker 5 is newly added to the established home theater scenario in FIG. 12B, as shown in FIG. 14. It is assumed that capability information of the speaker 5 includes supporting in using as a subwoofer speaker or a center-channel speaker. Because the speaker 1 to the speaker 4 are respectively a left-placed speaker, a right-placed speaker, a left surround speaker, and a right surround speaker, the large screen device determines that the second speaker can join the current home theater networking. If the capability information of the speaker 5 includes supporting in using as a left-placed speaker and a right-placed speaker, because the left-placed speaker and the right-placed speaker are already in the current home theater networking, the large screen device determines that the second speaker cannot join the current home theater networking.

In some embodiments, if the large screen device determines that the second speaker can join the established home theater, the following S1309 is performed: The large screen device adds the second speaker to the established home theater.

In some other embodiments, if the large screen device determines that the second speaker can join the established home theater, the large screen device displays a second establishment decision interface. For a specific implementation, refer to the corresponding descriptions of displaying the second establishment decision interface by the large screen device in S408.

In some embodiments, if the large screen device determines that the second speaker cannot join the established home theater, the large screen device may reject the second speaker to join the established home theater, or the large screen device may display a third establishment decision interface (which may also be referred to as a sixth interface). The third establishment decision interface is used to inform the user that the second speaker cannot join the established home theater, and may further indicate a reason why the second speaker cannot be added.

Optionally, when the large screen device determines that the second speaker cannot join the established home theater, the large screen speaker may mark the second speaker, and when current home theater networking does not change, the large screen device no longer receives a join request (for example, the first broadcast message) of the speaker.

S1309: The large screen device adds the second speaker to the established home theater.

In some embodiments, if the large screen device determines that the second speaker can join the established home theater, the large screen device adds the second speaker to the established home theater.

In some other embodiments, after the large screen device determines that the second speaker can join the established home theater, the large screen device adds the second speaker to the established home theater based on an operation of determining, by the user, to establish a home theater. For example, after the large screen device detects an operation that the user selects a "Yes" control in the second establishment decision interface, the large screen device adds the second speaker to the established home theater. If the large screen device detects an operation that the user selects a "No" control in the second establishment decision interface, the large screen device rejects the second speaker to join the established home theater. For a specific implementation of S1309, refer to S409. Details are not described herein again.

It should be noted that the method shown in FIG. 13 may further include a process in which the large screen device establishes a short-range communication connection to the second speaker. For a specific implementation, refer to the foregoing descriptions of the method shown in FIG. 4. Details are not described herein again. The speaker in FIG. 4 is replaced with the second speaker. And/or the method shown in FIG. 13 may further include a process in which the large screen device recommends a placement position of the second speaker to the user, and allocates a sound channel to the second speaker. For a specific implementation, refer to the foregoing descriptions of the method shown in FIG. 9A and FIG. 9B. Details are not described herein again. The speaker in FIG. 9A and FIG. 9B is replaced with the second speaker.

In this way, after a speaker is added to the established home theater, the large screen device may automatically discover the speaker, and automatically complete networking without an operation of the user. Compared with a manner in which the user needs to manually configure the device to complete networking each time the user purchases a device, this manner can reduce complexity of adding the new speaker to the established home theater, thereby improving user experience.

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. In the examples or the optional manners described in the foregoing embodiments, any content may be freely combined, and combined content also falls within the scope of this application. The foregoing descriptions are implementations of this application, but are not intended to limit the protection scope of this application.

The input method provided in embodiments of this application is described above in detail with reference to FIG. 4 to FIG. 14. The following describes in detail the first device and the second device provided in embodiments of this application with reference to FIG. 15.

FIG. 15 is a diagram of a structure of a device according to an embodiment of this application. For example, the device may be the first device or the second device. As shown in FIG. 15, a device 1500 may include a transceiver unit 1501, and may further include a processing unit 1502 and/or a display unit 1503.

In a possible design, the device 1500 is the first device, and the device 1500 may be configured to implement a function of the first device or the large screen device in the foregoing method embodiments.

Optionally, the transceiver unit 1501 is configured to support the first device in performing any receiving or sending function in FIG. 4 to FIG. 14.

Optionally, the processing unit 1502 is configured to support the first device in performing any processing function in FIG. 4 to FIG. 14.

Optionally, the display unit 1503 is configured to support the first device in performing a display function and/or a touch function in any one of FIG. 4 to FIG. 14.

The transceiver unit 1501 may include a receiving unit and a sending unit, may be implemented by a transceiver or a transceiver-related circuit assembly, and may be a transceiver or a transceiver module. Operations and/or functions of the units in the device 1500 are separately intended to implement corresponding procedures of the method in the foregoing method embodiments. All related content of steps in the foregoing method embodiments may be referenced to function descriptions of corresponding functional units. For brevity, details are not described herein again.

Optionally, the device 1500 shown in FIG. 15 may further include a storage unit (not shown in FIG. 15), and the storage unit stores a program or instructions. When the transceiver unit 1501, the processing unit 1502, and the display unit 1503 execute the program or the instructions, the device 1500 shown in FIG. 15 may perform the method in the foregoing method embodiments.

For technical effect of the device 1500 shown in FIG. 15, refer to the technical effect of the method in the foregoing method embodiments. Details are not described herein again.

In addition to a form of the device 1500, the technical solutions provided in this application may alternatively be a functional unit or a chip in the first device, or an apparatus that can be used together with the first device.

In another possible design, the device 1500 is the second device, and the device 1500 may be configured to implement a function of the second device or the speaker in the foregoing method embodiments.

Optionally, the transceiver unit 1501 is configured to support the second device in performing any receiving or sending function in FIG. 4 to FIG. 14.

Optionally, the processing unit 1502 is configured to support the second device in performing any processing function in FIG. 4 to FIG. 14.

Optionally, the display unit 1503 is configured to support the second device in performing any display function in FIG. 4 to FIG. 14.

The transceiver unit 1501 may include a receiving unit and a sending unit, may be implemented by a transceiver or a transceiver-related circuit assembly, and may be a transceiver or a transceiver module. Operations and/or functions of the units in the device 1500 are separately intended to implement corresponding procedures of the method in the foregoing method embodiments. All related content of steps in the foregoing method embodiments may be referenced to function descriptions of corresponding functional units. For brevity, details are not described herein again.

Optionally, the device 1500 shown in FIG. 15 may further include a storage unit (not shown in FIG. 15), and the storage unit stores a program or instructions. When the transceiver unit 1501, the processing unit 1502, and the display unit 1503 execute the program or the instructions, the device 1500 shown in FIG. 15 may perform the method in the foregoing method embodiments.

For technical effect of the device 1500 shown in FIG. 15, refer to the technical effect of the method in the foregoing method embodiments. Details are not described herein again.

In addition to a form of the device 1500, the technical solutions provided in this application may alternatively be a functional unit or a chip in the second device, or an apparatus that can be used together with the second device.

An embodiment of this application further provides an input system, including a first device and a second device.

Optionally, each device in the input system provided in this embodiment of this application may perform the method in the foregoing method embodiments. For technical effect of the input system, refer to the technical effect of the method in the foregoing method embodiments. Details are not described herein again.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a readable storage medium. The readable storage medium stores a program. When the program is run on a computer or a device, the computer or the device is enabled to perform the foregoing related steps, to implement the method in the foregoing embodiments.

An embodiment of this application further provides a program product. When the program product runs on a computer or a device, the computer or the device is enabled to perform the foregoing related steps, to implement the method in the foregoing embodiments.

In addition, an embodiment of this application further provides an apparatus. The apparatus may be specifically an assembly or a module, and the apparatus may include one or more processors and memories that are connected to each other. The memory is configured to store a program. When the program is executed by one or more processors, the apparatus is enabled to perform the method in the foregoing method embodiments.

The apparatus, the readable storage medium, the program product, or the chip provided in embodiments of this application are all configured to perform the corresponding method provided above. Therefore, for beneficial effect that can be achieved, refer to the beneficial effect in the corresponding method provided above. Details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

Based on the foregoing descriptions of implementations, a person skilled in the art may clearly understand that, for ease and brevity of description, division of the foregoing functional modules is merely used as an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for establishing a home theater, applied to a first device, and comprising:

   receiving m pieces of first capability information from m second devices, wherein each of the m pieces of first capability information indicates a sound channel supported by a corresponding second device, and m is an integer not less than 1;
   obtaining placement positions of the m second devices; and
   determining, based on the placement positions of the m second devices and the m pieces of first capability information, whether the placement positions of the m second devices meet a preset condition, wherein the preset condition comprises placement positions of second devices that support different sound channels during establishment of a home theater; and
   if it is determined that the placement positions of the m second devices do not meet the preset condition, displaying a first interface, wherein the first interface comprises recommendation information of a placement position of at least one of the m second devices; or
   if it is determined that the placement positions of the m second devices meet the preset condition, displaying a second interface, wherein the second interface comprises information indicating that placement succeeds.

2. The method according to claim 1, wherein the method further comprises:

   obtaining placement positions of the m second devices again; and
   determining, based on the re-obtained placement positions of the m second devices and the m pieces of first capability information, whether the re-obtained placement positions of the m second devices meet the preset condition; and
if it is determined that the re-obtained placement positions of the m second devices do not meet the preset condition, displaying a third interface, wherein the third interface comprises recommendation information of a placement position of at least one of the m second devices; or
if it is determined that the re-obtained placement positions of the m second devices meet the preset condition, displaying a fourth interface, wherein the fourth interface comprises information indicating that placement succeeds.

3. The method according to claim 1, wherein the method further comprises:

after it is determined that the placement positions of the m second devices meet the preset condition, determining sound channel types of the m second devices based on the placement positions of the m second devices; and
sending sound channel configuration information to the m second devices, wherein the sound channel configuration information indicates the sound channel type.

4. The method according to claim 2, wherein the method further comprises:

after it is determined that the re-obtained placement positions of the m second devices meet the preset condition, determining sound channel types of the m second devices based on the re-obtained placement positions of the m second devices; and
sending sound channel configuration information to the m second devices, wherein the sound channel configuration information indicates the sound channel type.

5. The method according to any one of claims 1 to 4, wherein before the obtaining placement positions of the m second devices, the method further comprises:

broadcasting an ultrasonic signal, wherein the ultrasonic signal comprises an ultrasonic identifier;
broadcasting a first message, wherein the first message comprises the ultrasonic identifier; and
obtaining, based on a first condition, n second devices that are in a same room as the first device, wherein n is an integer not less than 1, n is not less than m, and the first condition comprises: receiving a second message.

6. The method according to claim 5, wherein the obtaining, based on a first condition, n second devices that are in a same room as the first device comprises: if the first condition is met, determining that a second device that sends the second message and the first device are in a same room.

7. The method according to claim 5 or 6, wherein the second message comprises one or more of the following: an ultrasonic identifier, a signal strength of the ultrasonic signal, and a signal strength of the first message; and

the first condition further comprises one or more of the following: the ultrasonic identifier comprised in the second message is consistent with the ultrasonic identifier sent by the first device, the signal strength of the ultrasonic signal is greater than or equal to a first threshold, and the signal strength of the first message is greater than or equal to a second threshold; or
the first condition further comprises one or more of the following: the ultrasonic identifier comprised in the second message is consistent with the ultrasonic identifier sent by the first device, a distance corresponding to the signal strength of the ultrasonic signal is less than or equal to a third threshold, and a distance corresponding to the signal strength of the first message is less than or equal to a fourth threshold.

8. The method according to any one of claims 5 to 7, wherein after the obtaining, based on a first condition, n second devices that are in a same room as the first device, the method further comprises:
obtaining the m second devices from the n second devices based on first capability information of the n second devices and a second condition, wherein the first capability information of the m second devices meets the second condition, and the second condition is a condition for establishing a home theater.

9. The method according to any one of claims 1 to 8, wherein the method further comprises:

determining whether a newly added second device in a room in which the first device is located can join an established home theater system, wherein the established home theater system is established by the first device and the m second devices; and
if it is determined that the newly added second device in the room in which the first device is located can join the established home theater system, displaying a fifth interface based on the m pieces of first capability information, second capability information of the newly added second device, and the preset condition, wherein the fifth interface comprises information indicating a placement position of the newly added second device; or

if it is determined that the newly added second device in the room in which the first device is located cannot join the established home theater system, displaying a sixth interface, wherein the sixth interface comprises information indicating that the newly added second device cannot join the established home theater system.

10. The method according to claim 9, wherein the determining whether a newly added second device in a room in which the first device is located can join an established home theater system comprises:

determining, based on the first capability information of the m second devices, the second capability information of the newly added second device, and the second condition, whether the newly added second device can join the established home theater system, wherein the second condition is the condition for establishing a home theater.

11. A first device, wherein the first device comprises:

a display;
one or more processors; and
one or more memories, wherein
the memory stores one or more programs, and when the one or more programs are executed by the one or more processors, the first device is enabled to perform the method according to any one of claims 1 to 10.

12. A communication system, wherein the communication system comprises:

the first device according to claim 11; and
a second device, wherein the second device is configured to send first capability information to the first device, and the first capability information indicates a sound channel supported by the second device.

13. A readable storage medium, wherein the readable storage medium comprises a program, and when the program is run on a device, the device is enabled to perform the method according to any one of claims 1 to 10.

FIG. 1

FIG. 2

Large screen device

Networking management module 301a

Device discovery module 302a

Connection management module 305a

Ultrasonic processing module 303a

Ultrasonic transceiver module 304a

Communication management module 306a

(a)

Speaker

Networking management module 301b

Device discovery module 302b

Connection management module 305b

Ultrasonic processing module 303b

Ultrasonic transceiver module 304b

Communication management module 306b

(b)

FIG. 3

```
┌────────────────────────┐                              ┌──────────────┐
│   Large screen device  │                              │   Speaker    │
└────────────────────────┘                              └──────────────┘
            │                                                   │
┌───────────────────────────────────┐                          │
│  S401: Monitor a broadcast message │                         │
└───────────────────────────────────┘                          │
            │          S402: First broadcast message            │
            │◄──────────────────────────────────────────────────│
┌───────────────────────────────────┐                          │
│ S403: Start, based on the first    │                         │
│ broadcast message, to detect       │                         │
│ whether a speaker discovered by    │                         │
│ the large screen device and the    │                         │
│ large screen device are in a same  │                         │
│ room                               │                         │
└───────────────────────────────────┘                          │
            │          S404: Ultrasonic signal                  │
            │──────────────────────────────────────────────────►│
            │          S405: Second broadcast message           │
            │──────────────────────────────────────────────────►│
┌───────────────────────────────────────────────────────────┐  │
│ S406: Send a third broadcast message based on the         │  │
│ ultrasonic signal and the second broadcast message        │  │
└───────────────────────────────────────────────────────────┘  │
            │◄──────────────────────────────────────────────────│
┌───────────────────────────────────┐                          │
│ S407: Determine information about  │                         │
│ a same-chamber speaker based on    │                         │
│ at least one third broadcast       │                         │
│ message                            │                         │
└───────────────────────────────────┘                          │
┌───────────────────────────────────┐                          │
│ S408: Determine, based on          │                         │
│ capability information of the      │                         │
│ speaker and the information about  │                         │
│ the same-chamber speaker, whether  │                         │
│ the large screen device and the    │                         │
│ speaker that is in the same room   │                         │
│ as the large screen device can     │                         │
│ establish a home theater           │                         │
└───────────────────────────────────┘                          │
            │   S409: Complete establishment of the home theater│
            │◄─────────────────────────────────────────────────►│
            │                                                   │
```

FIG. 4

501

A speaker has been detected. Do you want to establish a home theater?

Yes | No

51 52

Speaker 2

Speaker 1

Speaker 4

Speaker 3

FIG. 5

Home of a user A

Large screen device

The large screen device broadcasts an ultrasonic signal and a second broadcast message

The speaker 1 broadcasts a third broadcast message

Speaker 1

The speaker 1 receives the ultrasonic signal and the second broadcast message

Home of a user B

Speaker 2

The speaker 2 receives only the second broadcast message

FIG. 6

701

A speaker that can be used to establish a home theater has been detected. Do you want to establish the home theater?

Speaker list

73

Yes | No

71    72

Speaker 2

Speaker 1

Speaker 4

Speaker 3

FIG. 7A

702

List of available speakers

XXXXXX
XXXXXX
XXXXXX
XXXXXX

Speaker 1

Speaker 2

Speaker 4

Speaker 3

FIG. 7B

```
┌─────────────────────┐                                    ┌──────────────┐
│ Large screen device │                                    │   Speaker    │
└─────────────────────┘                                    └──────────────┘
           │                                                       │
┌──────────────────────────────────────┐                          │
│ S801: Enable an unencrypted P2P GO    │                          │
└──────────────────────────────────────┘                          │
           │         S802: First connection message                │
           │──────────────────────────────────────────────────────▶│
           │                                                       │
           │       S803: Send a first request message              │
           │       based on the first connection message           │
           │◀──────────────────────────────────────────────────────│
           │                                                       │
           │         S804: Establish an unencrypted                 │
           │             Wi-Fi P2P connection                       │
           │◀──────────────────────────────────────────────────────▶│
           │                                                       │
           │       S805: Perform security authentication            │
           │◀──────────────────────────────────────────────────────▶│
           │                                                       │
```

FIG. 8

Large screen device

Speaker

S901: First ultrasonic signal

S902: Second ultrasonic signal

S903: First measurement indication information

S904: Record, based on the first measurement indication information, time at which the first ultrasonic signal is received

S905: Record, based on the first measurement indication information, time at which the second ultrasonic signal is received

S906: Determine an angle between the speaker and the large screen device based on the time at which the first ultrasonic signal is received and the time at which the second ultrasonic signal is received

S907: First measurement result

S908: Second measurement indication information

S909: The large screen device obtains a distance between the large screen device and the speaker by interacting with the speaker

S910: Display a placement position recommendation interface based on capability information of the speaker and a first rule

TO
FIG. 9B

TO
FIG. 9B

FIG. 9A

CONT. FROM FIG. 9A

CONT. FROM FIG. 9A

S911: Allocate a sound channel to the speaker, and determine sound channel configuration information

S912: Sound channel configuration information

S913: Sound channel configuration response

S914: Enable an encrypted P2P GO

S915: Second connection message

S916: Send a second request message based on the second connection message

S917: Establish an encrypted Wi-Fi P2P connection to the speaker based on the second request message

FIG. 9B

FIG. 10A

FIG. 10B

Large screen device

x

Left loudspeaker ☼                                    ☼ Right loudspeaker

α

t1

t2

Speaker

y

FIG. 10C

| Large screen device | Speaker |
|---|---|

$T_{s1}$          Third ultrasonic signal          $T_{r1}$

$T_{r2}$          Fourth ultrasonic signal          $T_{s2}$

FIG. 11

Speaker 1     Speaker 2

1201a

After adjustment of positions of the speakers is completed, click Next

Next

121

Speaker 3

Speaker 4

Speaker 2

Speaker 1

Speaker 4

Speaker 3

FIG. 12A(a)

FIG. 12A(b)

EP 4 622 297 A1

FIG. 12B

FIG. 13

Speaker 1

Speaker 2

Speaker 5

Speaker 3

Speaker 4

FIG. 14

Device 1500

| Transceiver unit | 1501 |

| Processing unit | 1502 |

| Display unit | 1503 |

FIG. 15

## INTERNATIONAL SEARCH REPORT

| International application No. |
|---|
| **PCT/CN2023/134491** |

| | | |
|---|---|---|
| **A.** | **CLASSIFICATION OF SUBJECT MATTER** | |
| | H04R 5/02(2006.01)i; H04S7/00(2006.01)i; G01S5/18(2006.01)i | |

According to International Patent Classification (IPC) or to both national classification and IPC

| | |
|---|---|
| **B.** | **FIELDS SEARCHED** |

Minimum documentation searched (classification system followed by classification symbols)

IPC: H04R, H04S, G01S

Documentation searched other than minimum documentation to the extent that such documents are included in the fields searched

Electronic data base consulted during the international search (name of data base and, where practicable, search terms used)

CNTXT, ENTXT, WPABS, WPABSC, VEN, CNKI: 检测, 获得, 获取, 测量, 音箱, 音响, 扬声器, 位置, 方位, 坐标, 声道, 指示, 提示, 提醒, 推荐, 指定, 界面, 用户接口, 窗口, 弹窗, detect, measure, obtain, gain, acquire, get, loudspeaker, voice box, speaker, position, location, coordinate, orientation, sound track, sound channel, soundtrack, indicate, instruction, direction, recommend, show, UI, user interface, window

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 112738693 A (HUIZHOU TCL MOBILE COMMUNICATION CO., LTD.) 30 April 2021 (2021-04-30)<br>entire document | 1-13 |
| A | CN 105163241 A (BEIJING XIAOMI TECHNOLOGY CO., LTD.) 16 December 2015 (2015-12-16)<br>entire document | 1-13 |
| A | CN 114339584 A (SHENZHEN SKYWORTH-RGB ELECTRONICS CO., LTD.) 12 April 2022 (2022-04-12)<br>entire document | 1-13 |
| A | CN 114268896 A (HUAWEI TECHNOLOGIES CO., LTD.) 01 April 2022 (2022-04-01)<br>entire document | 1-13 |
| A | CN 106998514 A (HUNAN HUIDE ELECTRONICS CO., LTD.) 01 August 2017 (2017-08-01)<br>entire document | 1-13 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 January 2024** | **26 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/134491** |

**C.    DOCUMENTS CONSIDERED TO BE RELEVANT**

| Category* | Citation of document, with indication, where appropriate, of the relevant passages | Relevant to claim No. |
|---|---|---|
| A | US 2011091055 A1 (BROADCOM CORP.) 21 April 2011 (2011-04-21)<br>entire document | 1-13 |

Form PCT/ISA/210 (second sheet) (July 2022)

## INTERNATIONAL SEARCH REPORT
### Information on patent family members

| International application No. |
| --- |
| **PCT/CN2023/134491** |

| Patent document cited in search report | | | Publication date (day/month/year) | Patent family member(s) | Publication date (day/month/year) |
| --- | --- | --- | --- | --- | --- |
| CN | 112738693 | A | 30 April 2021 | None | |
| CN | 105163241 | A | 16 December 2015 | None | |
| CN | 114339584 | A | 12 April 2022 | None | |
| CN | 114268896 | A | 01 April 2022 | None | |
| CN | 106998514 | A | 01 August 2017 | None | |
| US | 2011091055 | A1 | 21 April 2011 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211644507